# EUROPEAN PATENT SPECIFICATION

(11) **EP 4 608 710 B1**
(45) Date of publication and mention of the grant of the patent: **09.12.2026**
(21) Application number: 23798229.3
(22) Date of filing: 27.10.2023
(51) Int. Cl.: B63B 1/10, B63B 21/50, B63B 77/10

(54) **BUOYANT OFFSHORE PLATFORM DEPLOYMENT DEVICE AND A METHOD OF DEPLOYING BUOYANT OFFSHORE PLATFORMS**
SCHWIMMENDE OFFSHORE-PLATTFORM-EINSATZVORRICHTUNG UND VERFAHREN ZUM EINSATZ SCHWIMMENDER OFFSHORE-PLATTFORMEN
DISPOSITIF DE DÉPLOIEMENT DE PLATEFORME FLOTTANTE EN MER ET PROCÉDÉ DE DÉPLOIEMENT DE PLATEFORMES FLOTTANTES EN MER

(30) Priority: 28.10.2022 GB 202216014
(43) Date of publication of application: 03.09.2025
(73) Proprietor: Marine Power Systems Limited, Swansea SA1 2AQ (GB)
(72) Inventor: FOSTER, Graham, Swansea South Wales SA1 2AQ (GB)
(74) Representative: Murgitroyd & Company
(86) International application number: PCT/EP2023/080158
(87) International publication number: WO 2024/089283

(56) References cited:
- JP-A- 2010 115 978
- US-A- 4 881 852

## Description

### Field of the Disclosure

The present disclosure relates to a buoyant offshore platform deployment device and a method of deploying buoyant offshore platforms.

### Background to the Disclosure

Wave energy and offshore wind energy have both been identified as leading technology options to decarbonise the global energy system. The economic viability and practical feasibility of these renewable energy systems are heavily reliant on the ease and cost of installation and maintenance of these systems offshore. One solution to minimise the costs of
these systems is to install the wave energy and wind energy systems offshore on floating or buoyant platforms.

Buoyant offshore platforms are beneficial in that the foundations required for a buoyant offshore platform are typically quicker and easy to install on the bed of the body of water, and the foundations can be more easily laid at greater depths. Furthermore, a complete buoyant offshore platform may be manufactured on or adjacent to land and can then be towed out to the desired location rather than assembled offshore piece-by-piece. However, problems exist with current state-of-the-art buoyant offshore platforms and with the methods and equipment used to install them offshore. Objects and aspects of the present disclosure seek to alleviate at least these problems with the prior art.

JP2010115978A describes a support floating body for a tension mooring floating body. Additional prior art can be found in US4881852A.

### Summary of the Disclosure

The present disclosure is directed to a deployment system intended for deploying a buoyant offshore platform to a desired operating depth in a body of water, the buoyant offshore platform for supporting a renewable energy capture and conversion system thereon. Such buoyant platforms, when fixed in place at a submerged operating depth in a body of water, are typically stable against dynamic wave and wind forces acting on the platform, due to the counteracting nature of the buoyancy forces against an opposing tension in the fixing means (such as one or more mooring lines). Said stability is generally understood to enable both improved safety against harsh weather and wave conditions, along with optimal operation of the supported renewal energy capture and conversion systems in varying wave and weather conditions. Such safety and stability characteristics can, however, be affected by a specific shape and form factor of the buoyant platform, requiring the design of said shape and form factor to be finely tuned to optimise said safety and stability, and consequentially energy capture and conversion performance. Any unnecessary design elements required to be made to the platform, such as an on-board deployment device, or deployment device fixings, can therefore have deleterious effects on said optimisation.

While deployed submerged in a body of water, such a buoyant platform is typically intended to remain relatively stationary in use in order to optimise energy capture and conversion, while also preferably minimising loads and accelerations on sensitive equipment and machinery. Such use in a marine environment can attract or encourage corrosion and marine growth on moveable parts. As such, use of moveable parts to move the platform from a submerged deployed position to a floating undeployed position for, for example, maintenance, repair or relocation of a platform can be difficult.

In accordance with a first aspect of the present disclosure, there is provided a deployment device for use in deploying an offshore renewable energy system mounting platform to a submerged operating configuration, the deployment device comprising: a body portion comprising a platform engaging portion, the platform engaging portion arranged to fixably engage a corresponding portion of an offshore renewable energy system mounting platform; a mooring line tensioning member coupled to the body portion; wherein the platform engaging portion is further arranged to disengage from the corresponding portion of the platform; and further wherein, in use when the platform engaging portion is engaged with the corresponding portion of the platform, the mooring line tensioning member is arranged to apply a tensioning force to at least one mooring line along a plane substantially perpendicular to a base of said platform, wherein under said tensioning force the body portion is arranged to move relative to the at least one mooring line from a first undeployed position to a second deployed position; and wherein the body portion comprises: an elongate turret affixed to the platform engaging portion, the turret comprising: an elongate turret body having a first end, and a second end distal to the first end.

The at least one mooring line is preferably in communication with the mooring line tensioning member.

The present disclosure therefore provides a detachable deployment system which preferably allows detachment and reattachment of the deployment system to a buoyant offshore platform at will. The same deployment system may therefore be used to deploy a series of platforms.

The present disclosure additionally aims to decouple the design processes of buoyant platforms and associated deployment systems, permitting respective designs to be optimised for the individual roles and engineering constraints for both subsystems, while also permitting, within such a developing sector, platform design iteration without extensive consideration required for method of deployment of the platform.

Applying a vertical tensioning force for moving a mooring line relative to the platform in a planar fashion can in some embodiments preferably avoid spooling issues which can be common in motorised winch designs and ins some embodiments can preferably permit staged tensioning of lines.

The detachable nature of the present disclosure preferably additionally reduces marine growth and corrosion that would pose a problem for a deployment system that remained in place on the platform for the life of the platform.

The terms "first undeployed position" and "second deployed position" will be understood as terms representing a position in space of the platform or any of the equipment relating to the deployment system (such as the body portion thereof) which may be attached to or engaged with the platform either permanently or temporarily, relative to a surface of a body of water in which the buoyant offshore platform is being deployed. The "first undeployed position" in some preferable embodiments relates to the platform floating on the surface of the body of water, and the "second deployed position" in some preferable embodiments relates to the platform being partially submerged in the body of water. In some preferable embodiments, at the second deployed position, the at least one mooring line of the deployment device may be disengaged from a fixed mooring line affixed to a bed of the body of water, which may be following affixing of the fixed mooring line to the platform. In line with said use it will accordingly be appreciated that the plane in which the tensioning force is applied by the mooring line tensioning member is intended to be parallel to the plane of movement of the platform between said positions.

In some preferable embodiments, said tensioning force is arranged to move the body portion or the at least one mooring line a distance along said plane, said distance equal to a distance between the first undeployed position and the second deployed position. Embodiments will accordingly be appreciated wherein, when said tensioning force is applied to the at least one mooring line by the mooring line tensioning member, a fixed point along the body portion or along said at least one mooring line moves in the same plane as the applied tensioning force, optionally over a distance along said plane equal to a distance between the first undeployed position and the second deployed position.

The at least one mooring line is preferably a tensioning line having an end arranged to releasably engage a first end of a mooring line of a said offshore renewable energy system mounting platform, said mooring line affixed to a bed of a body of water. Thereby, the tensioning line is preferably separate to, and releasably engageable with, a corresponding mooring line, or mooring lines, of the platform. The tensioning line is therefore preferably a part of the deployment device and can be detached along with the deployment device from the platform following deployment thereof, for example for use in deploying further platforms. Preferably, when the tensioning line is engaged with said mooring line, the mooring line tensioning member is arranged to apply the tensioning force to the tensioning line such that the body portion moves from the first undeployed position to the second deployed position. In some preferable embodiments, the mooring line tensioning member and corresponding tensioning line are any suitable combination, and may preferably be selected from the group: a chain jack and corresponding chain; a strand jack and one or more corresponding wire strands; a winch and corresponding flexible line. In some preferable embodiments, the mooring line tensioning member comprises a rigid actuating member having an end arranged to releasably engage a first end of the at least one mooring line of said offshore renewable energy system mounting platform, said mooring line affixed to a bed of a body of water. In such embodiments when the rigid actuating member is engaged with said mooring line, the mooring line tensioning member is preferably arranged to move the rigid actuating member to apply the tensioning force to the mooring line engaged therewith, such that the body portion moves from the first undeployed position to the second deployed position. In some preferable embodiments, the mooring line tensioning member and corresponding rigid actuating member are any suitable combination, and may preferably be selected from the group: a climbing jack and corresponding climbing ladder; an indexing jack and corresponding indexed member. The movement of the rigid actuating member relative to the body portion by the mooring line tensioning member is arranged to apply and maintain the tensioning force to the at least one mooring line during deployment of the platform from a floating configuration to a submerged, or partially submerged, operating configuration. Said movement of the actuating member is preferably in a direction substantially perpendicular to a base of said platform. The movement of the actuating member may in some embodiments additionally include rotational movement, such as for example in a screw fashion. The rigid actuating member may, in some embodiments, be permanently engaged with at least one mooring line of the deployment device, or a tensioning line of the deployment device.

In some preferable embodiments, the tensioning member is arranged to move relative to the body portion along said plane, between the first undeployed position, and the second deployed position, such that the tensioning force is applied to the at least one mooring line along said plane. Accordingly, embodiments will be appreciated wherein as the tensioning member moves along said plane relative to the body portion, at a distance equal to the movement of the body portion, the tensioning member pulls on the at least one mooring line along said plane. The relative movement of the body portion and the mooring line tensioning member in such embodiments thereby preferably causes the body portion to move from the first undeployed position toward the second deployed position.

In some embodiments, the deployment device preferably further comprises one or more buoyancy members. The one or more buoyancy members preferably enable the deployment device to float on a surface of a body of water, and provides a buoyancy force arranged to act in a direction opposing the direction of the applied tensioning force. Said opposition of the tensioning force by a buoyancy force preferably improves stability during tensioning and deployment of the platform. The one or more buoyancy members preferably supplement one or more buoyancy members of an offshore renewable energy system mounting platform, thereby providing additional buoyancy and increased water plane area, and therefore additional stability during deployment and/or tensioning. Connection of the deployment device to the platform at a periphery thereof preferably provides a wide spread of buoyancy points which can be favourable to resist excessive pitching or rolling of the platform during deployment. In some embodiments, the one or more buoyancy members may aid in retrieval of the deployment device following disengagement of the deployment device from the platform.

In some embodiments, the deployment device preferably further comprises one or more limb members or fins extending therefrom and positioned on the deployment device such that the limb members or fins are located beneath a surface of a body of water when the deployment device is engaged with a platform. The one or more limb members or fins are preferably movement stabilizers arranged to reduce pitch or roll of the deployment device and/or a platform engaged therewith, during transport of the deployment device (and optionally said platform) and/or during deployment of the platform. The one or more movement stabilisers may take any suitable form, and may resemble, for example, ship stabilisers. The movement stabilisers may in some embodiments be static and provide a passive movement stabilisation, and in some embodiments may be moveable relative to the body portion, such as laterally and/or rotationally relative thereto, to provide said movement stabilisation. Such movement of the one or more limb members or fins may be performed to react to dynamic waves forces acting on the deployment device, and may be performed manually or automatically.

In preferable embodiments, the platform engaging portion is shaped to engage a corresponding connector on the platform. In some such embodiments, the platform engaging portion preferably comprises a plug member extending from the first end of the turret body, the plug member having a first end proximate the turret body and second end distal to the turret body, wherein the second end of the plug member is arranged to engage a corresponding socket of the platform, said engagement inhibiting lateral movement of the plug member relative to the socket. In some preferable embodiments, the body portion and/or the platform engaging portion comprises one or more self aligning features arranged to guide the correct insertion and orientation of the plug (and therefore the deployment device) within the socket. In such embodiments the body portion and/or the platform engaging portion may comprise one or more features shaped to engage the socket and/or the platform to provide a single orientation of the deployment device relative to the platform. In preferable embodiments, the plug member further comprises a flange radiating from proximate the first end thereof, the flange arranged to limit further insertion of the plug member into said socket.

In some embodiments comprising a turret, the turret body preferably further comprises one or more landing features positioned along the length thereof, said landing features arranged to permit engagement of the turret to one or more marine vessels, for example for the purpose of transferring operating or maintenance personnel to and from the deployment device. The one or more boat landing features, in some embodiments, are preferably arranged to align with and/or engage corresponding features on said platform. The alignment of or engagement with the corresponding features on the platform thereby preferably acts as a self aligning feature of the deployment device, permitting only a single desired orientation of the deployment device relative to the platform. Such a single permitted orientation of the deployment device relative to the platform preferably improves speed and ease of deployment, while positioning the deployment device for maximum ease of access and operation. In embodiments comprising a turret and one or more buoyancy members, the one or more buoyancy members may remain floating on the surface of the body of water during deployment. Such embodiments may aid retrieval of the deployment device following disengagement from the platform. In other embodiments, the one or more buoyancy members may be submerged along with the platform during deployment. Such embodiments may aid stability of the platform during deployment.

In some embodiments, the elongate turret further comprises a top member arranged to engage the second end of the turret body, the top member comprising a platform supporting the mooring line tensioning member thereon. The top member is preferably arranged to engage the second end of the turret body such that the top member is detachable from the second end of the turret body. This modular arrangement may improve ease of transport and attachment or detachment of the turret from the platform. In some preferable embodiments, at the second deployed position, the platform of the top member is arranged to remain above a surface of a body of water. The platform may support the mooring line tensioning member, and in embodiments wherein the platform remains above the surface of the body of water throughout deployment, the tensioning member and any other devices supported on the platform are protected from the effects of exposure to water.

Preferably the turret body comprises a channel extending along the length thereof between the first end and the second end, and wherein at least a portion of: the at least one mooring line; the tensioning line; or the rigid actuating member; extends along said channel. The channel is preferably centrally positioned and coaxial with the turret body. The central positioning of the channel, along with the central positioning of any mooring line extending therealong, preferably acts to optimise ease of deployment through application of the tensioning force by the tensioning member.

In some preferable embodiments, the turret body further comprises at least one ballast support member arranged to support at least one removable ballast thereon. The provision of a ballast support member for supporting a removable ballast preferable enables the application of a ballast mass to the deployment device, the ballast mass providing a ballast weight acting downward against the buoyancy of a buoyant offshore renewable energy system mounting platform to be deployed. The ballast mass of the removable ballast thereby supports the application of a tensioning force to the mooring line by the tensioning member, thereby permitting the use of a lower duty tensioning device than would otherwise be used. The removable nature of the ballast preferably improves ease of deployment, wherein the ballast may be removed when the platform is deployed to the second deployed position ahead of detachment of the remaining portions of the deployment device from the platform.

The turret body preferably further comprises a ballasting fluid compartment arranged to house a volume of ballasting fluid; wherein the turret body further comprises a ballasting fluid inlet arranged to receive the ballasting fluid into the ballasting fluid compartment; and a ballasting fluid outlet arranged to permit egress of the ballasting fluid from the ballasting fluid compartment. The ballasting fluid may be any suitable ballasting fluid, such as for example sea water, or a slurry. The ballasting fluid preferably comprises a higher density than sea water, thereby optimising form factor of the ballasting fluid compartment.

In some preferable embodiments, the deployment device further comprises a pump arranged to pump the ballasting fluid into and/or out of the ballasting fluid compartment. The ballasting fluid compartment may in some embodiments not be located on the deployment device, and may instead be located within an appropriate portion of the offshore platform. In some such embodiments, the deployment device preferably further comprises a pump arranged to pump a ballasting fluid into and/or out of a cavity located in a said offshore renewable energy system mounting platform. Such embodiments preferably act to minimise form factor of the deployment device by negating the need for an on-board ballasting fluid compartment. In such embodiments wherein the cavity located in a said offshore renewable energy system mounting platform is arranged to provide, or contribute to, the net buoyancy of the platform, for example by comprising a buoyancy fluid such as air, the deployment device may be arranged to substitute at least a portion of said buoyancy fluid with an amount of said ballasting fluid, the ballasting fluid thereby arranged to reduce the net buoyancy of the platform. Said substitution may be by way of any suitable means, such as using a said pump.

In some embodiments, the elongate turret preferably further comprises: a rail extending along a portion of the turret body; and wherein the mooring line tensioning member is affixed to the rail, the mooring line tensioning member arranged to move along the rail between the first undeployed position, and the second deployed position.

In some preferable embodiments, the tensioning member further comprises a motor arranged to drive said movement of the mooring line tensioning member along the rail. Such motorised planar movement along the rail may be used to apply the tensioning force to the at least one mooring line. Such may additionally, or alternatively, be used to apply an initial tensioning force to the at least one mooring line in order to tauten the at least one mooring line against the bed of the body of water. The tensioning force may optionally then be applied to the at least one mooring line by said motorised movement of the tensioning member. In some embodiments the deployment device may further comprise one or more ballast members, each of the one or more ballast members comprising a mass. The one or more ballast members are preferably arranged to apply a weighting force to the mooring line tensioning member, proportional to the ballast mass. Such a weighting force is preferably arranged to supplement or apply the tensioning force. In embodiments comprising a turret, the one or more ballast members are preferably arranged to move between a first height proximate the second end of the turret body, and a second height lower down the turret body, during application of the tensioning force. The one or more ballast members may in some embodiments provide additional stability to the turret and/or the platform engaged therewith.

In some embodiments, the mooring line tensioning member preferably comprises an elongate turret comprising: a turret body having a first end, and a second end distal to the first end; and a rail extending along a portion of the turret body; wherein a first end of the at least one mooring line is coupled to the turret body proximate the first end thereof. In such embodiments, the rail is preferably moveably coupled to the body portion such that the turret is arranged to move along said plane.

In some embodiments comprising a turret, the engagement between the platform engaging portion and the platform is preferably such that when the platform engaging portion is engaged, the turret extends substantially perpendicular to a base of said platform.

In some embodiments, the tensioning member preferably comprises a reciprocating unidirectional mechanism arranged to apply said tensioning force, the reciprocating unidirectional mechanism comprising: a first hydraulic ram and a second hydraulic ram, each of said first and second hydraulic rams affixed to a corresponding moveable unidirectional member having: a tensioning mode in which the unidirectional member is arranged to restrict movement of one of said mooring lines to a first direction along said plane, and further arranged to be moved by the corresponding hydraulic ram in the first direction to apply a second tensioning force to said mooring line; and a release mode in which the unidirectional member is arranged to be moved along said mooring line in a second direction along said plane, the second direction opposing the first direction, by the corresponding hydraulic ram; wherein each said unidirectional member is arranged to transition between the tensioning mode and the release mode in a reciprocating manner.

In some such embodiments, each said unidirectional member may preferably be moved by the corresponding first or second hydraulic ram independently of the other unidirectional member. In preferably such embodiments, the at least one mooring line comprises a chain, and wherein the reciprocating unidirectional mechanism is a chain jack. Embodiments will be appreciated wherein the tensioning member is any suitable device, for example a powered winch.

In some embodiments, the tensioning member may comprise active heave compensation, which preferably enables continuous operation in varying sea states. In some embodiments, the tensioning member may be arranged to apply a constant said tensioning force to the at least one mooring line, and in some embodiments said constant tensioning force may be arranged to be adjusted by a user or automatically adjusted, for example in accordance with a particular sea state. The tensioning member may comprise any advanced control suitable for enabling a more efficient and safe operation of the deployment device in deploying said platform.

In some embodiments, the at least one mooring line preferably further comprises a terminal end arranged to be coupled to a bed of a body of water.

In preferable embodiments, in said use, movement of the body portion toward the second deployed position is arranged to submerge said platform in said body of water to a submerged operating configuration having an operating depth. In preferable such embodiments, said operating depth is substantially equal to a distance between the first undeployed position and the second deployed position.

In accordance with a second aspect of the present disclosure, there is provided a buoyant offshore platform for supporting a renewable energy system in a body of water having a surface and a bed, said buoyant offshore platform comprising: a base portion for submerging below said surface of said body of water; a top portion for remaining above said surface of said body of water; a connector positioned on the base portion or the top portion; and a deployment device, the deployment device comprising: a body portion comprising a platform engaging portion, the platform engaging portion arranged to fixably engage the connector; a mooring line tensioning member coupled to the body portion; wherein the platform engaging portion is further arranged to disengage from the corresponding portion of the platform; and further wherein, in use when the platform engaging portion is engaged with the connector, the mooring line tensioning member is arranged to apply a tensioning force to at least one mooring line along a plane substantially perpendicular to the base portion, wherein under said tensioning force the body portion is arranged to move relative to the at least one mooring line from a first undeployed position to a second deployed position.

In some embodiments the buoyant offshore platform preferably further comprises: a floating configuration in which the buoyant offshore platform is positioned substantially floating on said surface of said body of water; and a submerged operating configuration in which the base portion is submerged beneath said surface of said body of water and the top portion remains above said surface of said body of water; and wherein in said use, the tensioning force applied to the at least one mooring line is such that the buoyant offshore platform transitions between the floating configuration when the body portion is in the first undeployed position, and the submerged operating configuration when the body portion is in the second deployed position.

In some embodiments, the base portion preferably comprises at least three vertices, wherein at least said three vertices comprises a corresponding said connector; wherein the platform further comprises a number of said deployment devices equal to the number of connectors.

It will be appreciated that the deployment device of the platform in accordance with the second aspect may be a deployment device in accordance with the first aspect.

In accordance with a third aspect of the present disclosure, there is provided a method of deploying a buoyant offshore platform for supporting a renewable energy system, the method comprising: moving a buoyant offshore platform along a surface of a body of water to a location on the body of water; attaching a deployment device to the buoyant offshore platform; fixing one or more mooring lines between the deployment device and a bed of the body of water; applying, using the deployment device, a tensioning force to the at least one mooring line along a plane substantially perpendicular to a plane occupied by a base portion of the buoyant offshore platform, such that a portion of the buoyant offshore platform becomes submerged in the body of water; and detaching the deployment device from the buoyant offshore platform.

The method may further comprise, in some embodiments, affixing at least one fixed length mooring line between the buoyant offshore platform and the bed of the body of water.

It will be appreciated that the deployment device of the method in accordance with the third aspect may be a deployment device in accordance with the first aspect.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### Detailed Description

Specific embodiments will now be described by way of example only, and with reference to the accompanying drawings, in which:
FIG. 1 provides a perspective view of a platform in accordance with the second aspect comprising three deployment devices in accordance with the first aspect in use in deploying the platform to a submerged operating configuration;
FIG. 2 provides a perspective view of an example embodiment of a deployment device in accordance with the first aspect as depicted in FIG. 1;
FIG. 3 provides an exploded view of the buoyant platform and deployment device of FIG. 1 and FIG. 2, the floating at a desired deployment location in a body of water, and ahead of affixing the deployment device to the platform in a step of an example embodiment of a method in accordance with the third aspect;
FIG. 4 provides a perspective view of the platform and deployment device of FIG. 3 in a subsequent step in an example method in accordance with the third aspect, in which a temporary mooring line is affixed between the deployment device and the bed of the body of water;
FIG. 5 provides a perspective view of the platform and deployment device of FIGs. 3 and 4 in a subsequent step in the example method, in which a tensioning member of the deployment device is moved vertically along a rail of the deployment device to apply a tension to the temporary mooring line and to submerge the platform in the body of water;
FIG. 6 provides a perspective view of the platform of FIGs. 3 to 5, deployed to a submerged operating configuration, at an operating depth within the body of water, and with the deployment device removed;
FIG. 7A provides a perspective exploded view of a further example embodiment of a deployment device in accordance with the first aspect;
FIG. 7B provides a cutaway view of the example embodiment of FIG. 7A engaged with an offshore renewable energy system mounting platform;
FIG. 7C provides a perspective view of the example embodiment shown in FIG. 7B;
FIG. 8A to FIG. 8G provide a sequence of perspective views constituting steps in a method in accordance with the third aspect, the method being a method of deploying a buoyant offshore platform using the example deployment device depicted in FIG. 7A to FIG. 7C;
FIG. 9A provides a perspective exploded view of a further example embodiment of a deployment device in accordance with the first aspect;
FIG. 9B provides a cutaway view of the example embodiment of FIG. 9A engaged with an offshore renewable energy system mounting platform;
FIG. 10A provides a perspective exploded view of a further example embodiment of a deployment device in accordance with the first aspect;
FIG. 10B provides a cutaway view of the example embodiment of FIG. 10A engaged with an offshore renewable energy system mounting platform;
FIG. 11A provides a perspective exploded view of a further example embodiment of a deployment device in accordance with the first aspect;
FIG. 11B provides a cutaway view of the example embodiment of FIG. 11A engaged with an offshore renewable energy system mounting platform;
FIG, 12A and FIG. 12B provides a front cutaway view of a further example embodiment of a deployment device in accordance with the first aspect engaged with an offshore renewable energy system mounting platform of the second aspect;
FIG. 12C provides a partial close-up view of the rigid actuating member of the embodiment of FIG. 12A and FIG 12B; and
FIG. 13 shows example steps of a method of deploying a buoyant offshore platform in accordance with the third aspect.

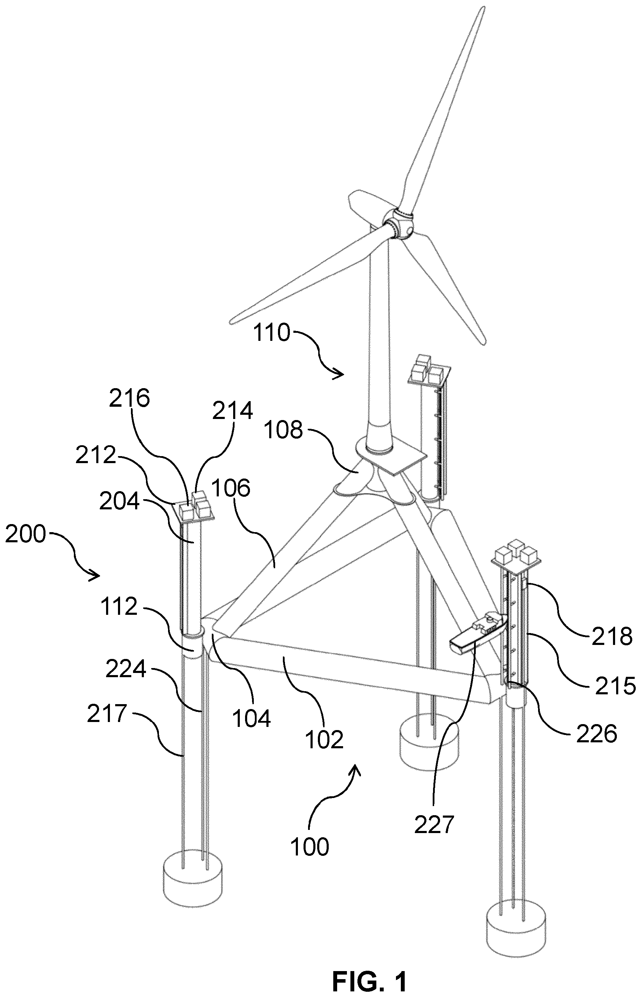

Referring to FIG. 1, a perspective view of an example embodiment of a buoyant offshore platform 100 is shown in accordance with the second aspect, the platform 100 being suitable for supporting one or more renewable energy systems mounted thereon. In the particular example described, the platform 100 comprises a base portion formed of three elongate, cylindrical lateral braces 102. Each of the three lateral braces 102 is connected to an adjacent lateral brace 102 by way of a connector 104 affixed at one end thereof, the braces 102 and the connectors 104 together forming a triangular base portion of the buoyant platform 100 with three vertices. Extending upwardly from each connector 104 oblique to the base portion, the platform 100 further comprises an elongate cylindrical diagonal brace 106, the diagonal braces 106 converging at an end thereof distal to the respective connector 104 to form a substantially tetrahedral platform 100 in the example shown. The three diagonal braces 106 are connected together by a top portion 108 of the tetrahedral platform 100, the top portion 108 supporting a wind turbine 110. The tetrahedral shape of the particular example shown provides a preferable level of support and stability to the wind turbine 110 supported thereon when deployed to a submerged operating configuration in a body of water. Embodiments will be appreciated wherein the platform may take any suitable shape for a desired application. In particular, while the platform is depicted supporting a wind turbine, the platform may support any suitable renewable energy system, such as a wave energy converter, or any suitable combination of renewable energy systems.

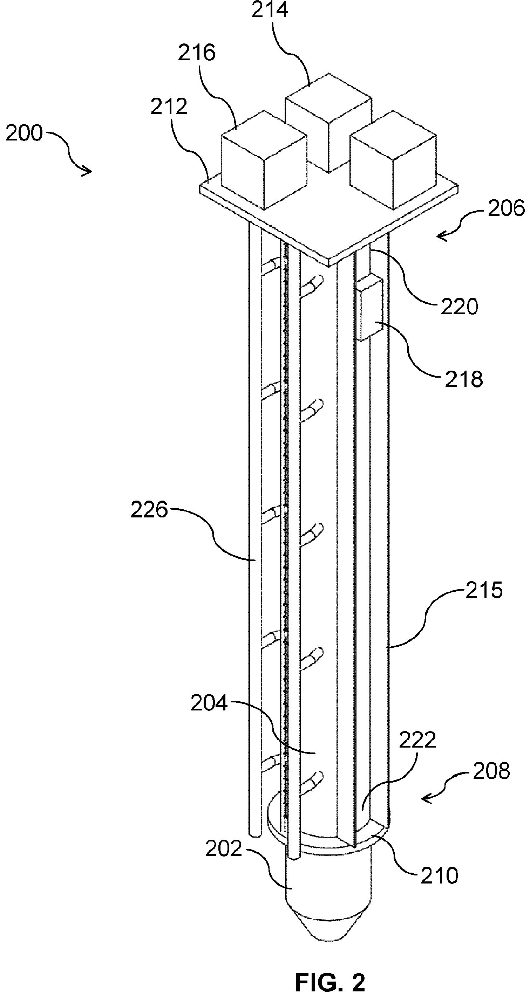

In the example shown in FIG.1, each connector 104 additionally comprises a socket 112 located on an outer portion thereof. Each socket 112 is shaped to receive a complementary platform connector 202 of a respective deployment device 200 in accordance with the first aspect of the present disclosure. A more detailed description of each deployment device 200 is given in reference to FIG. 2 below. In the particular example shown in FIG. 1, the respective platform connectors of the three deployment devices 200 are arranged to engage with the corresponding socket 112 of the platform 100 such that the deployment device 200 is supported while lateral movement or rotation of the deployment device 200 is inhibited. Said engagement is also arranged such that each deployment device 200 may disengage with the corresponding socket 112 when deployment of the platform 100 to a submerged operating configuration is complete.

In the particular example shown, the lateral braces 102 of the triangular base portion of the platform 100 are hollow and comprise a gas such as air, or a gas/liquid mixture, in order to provide a buoyancy to the lateral braces 102 and therefore to the platform 100. Embodiments will be appreciated wherein said buoyancy is provided by any suitable means, such as for example one or more buoyancy tanks distributed on the platform. The buoyancy of the platform 100 confers stability to the platform 100, and therefore to a renewable energy system supported thereon, when the platform 100 is submerged in a body of water.

FIG. 2 shows a perspective view of an example embodiment of a deployment device 200 as shown in FIG. 1 and in accordance with the first aspect of the present disclosure. In the example shown, the deployment device 200 comprises a turret having an elongate cylindrical turret body 204 having a first end 206 and a second end 208. Extending from the turret body 204 at the first end thereof 206 is a platform connector 202. In the embodiment shown, the platform connector 202 comprises a substantially cylindrical body having a chamfered terminal end distal to the turret body 204. The body of the platform connector 202 extends along the same plane at the turret body 204 and is substantially coaxial therewith. The body of the connector 202 is shaped to engage the socket 112 of the platform 100 in a complementary fashion in order to facilitate subsequent disengagement of the connector 202 from the socket 112. In the example shown, the connector 202 is further shaped to provide a snug fit within the socket 112, maximising the surface area of mating surfaces between the socket 112 and the connector 202 such that lateral and pitching movement of the connector 202 within the socket 112 is inhibited. The connector 202 is shaped to engage the socket 112 in a single rotational orientation only, thereby serving as a self aligning feature to achieve the desired orientation of the device 200 relative to the platform 100. The connector 202 additionally comprises latching features (not shown) arranged to temporarily affix the device 200 to the platform 100. Embodiments will be appreciated wherein the insertion of the connector 202 to the socket 112 is sufficient to provide the desired temporary connection of the device 200 to the platform 100 without the need for latching features.

Positioned at the interface between the connector 202 and the turret body 204 is a circular radial flange 210 extending outwardly from the turret body 204 and perpendicular to the longitudinal axis thereof. The flange 210 comprises a substantially planar upper and lower surface. In the example shown, the planar lower surface of the flange 210 engages with an upper surface of a wall of the socket 112 of the platform 100 during engagement of the connector 202 with said socket 112. Said engagement between the flange 210 and the socket 112 acts to inhibit further movement of the connector 202 into the socket 112 while also preventing pitching movement of the connector 202, and therefore the turret body 204, while the connector 202 is fully engaged with the socket 112. The planar upper surface of the flange 210 provides a surface atop which deployment or maintenance personnel may work during deployment or maintenance of the platform 100.

Positioned on the turret body 204 at the second end 208 thereof, is a planar rectangular surface 212 extending across the top of the turret body 204 and substantially co-centred therewith. The rectangular surface 212 supports multiple housings, including for power supply equipment 214, 216. Embodiments will be appreciated wherein any suitable equipment may be supported, for example one or more ballast members, which may be intended for providing added stability to the turret body, or for providing, or augmenting the application of, a tensioning force to the mooring lines.

The turret further comprises an elongate rail 215 extending along the length of the turret body 204, and in the example shown, extends between the flange 210 of the connector 202 and the surface 212 atop the turret body 204.

Coupled to the rail 215, the turret further comprises a tensioning member 218. In the example shown, the tensioning member 218 comprises a body housing a motor (not shown) configured to drive movement of the tensioning member 218 along the rail 215 between an uppermost first position 220 near the second end 208 of the turret body 204 and a lowermost second position 222 near the first end 206 of the turret body 204. In the example shown, the motor of the tensioning member 218 is in communication with the power supply 214 and receives power therefrom in order to drive said movement of the tensioning member between the first position 220 and the second position 222.

The turret further comprises a temporary lowering line (TLL) 217 extending from the tensioning member 218 at one end thereof, and temporarily affixed to an anchor point on the bed of the body of water at an opposing end thereof. The tensioning member 218 is arranged to apply a tensioning force to the TLL 217 when the tensioning member 218 moves upwards along the rail 215 from the second position 222 to the first position 220, thereby urging the platform 100 beneath the surface of the body of water. Permanently affixed to an anchor point on the bed of the body of water, and extending upwardly therefrom, are two fixed-length flexible mooring lines 224 of the platform 100. When the platform 100 is sufficiently submerged by movement of the tensioning member 218 along the rail 215 as discussed, the two fixed-length permanent mooring lines 224 are engaged with the platform 100. The fixed-length of the permanent mooring lines 224 thereby defines the desired operating depth of the platform 100. Following engagement of the fixed-length mooring lines 224 to the platform 100, the TLL 217 may be disengaged from the corresponding anchor point as part of the disengagement of the deployment device 200 from the platform 100. The tensioning member 218 may be moved a short distance from the first position 220 toward the second position 222 in order to release tension in the TLL 217 prior to said disengagement.

In the embodiment shown in FIG. 2, the turret 200 further comprises landing features taking the form of a guide rail 226 protruding from the turret body 204 and extending along the length thereof between the first end 206 and the second end 208. The guide rail 226 in the example shown is configured to be engaged by one or more marine vessels 227 for aiding movement of operation and maintenance personnel to and from the deployment device 200.

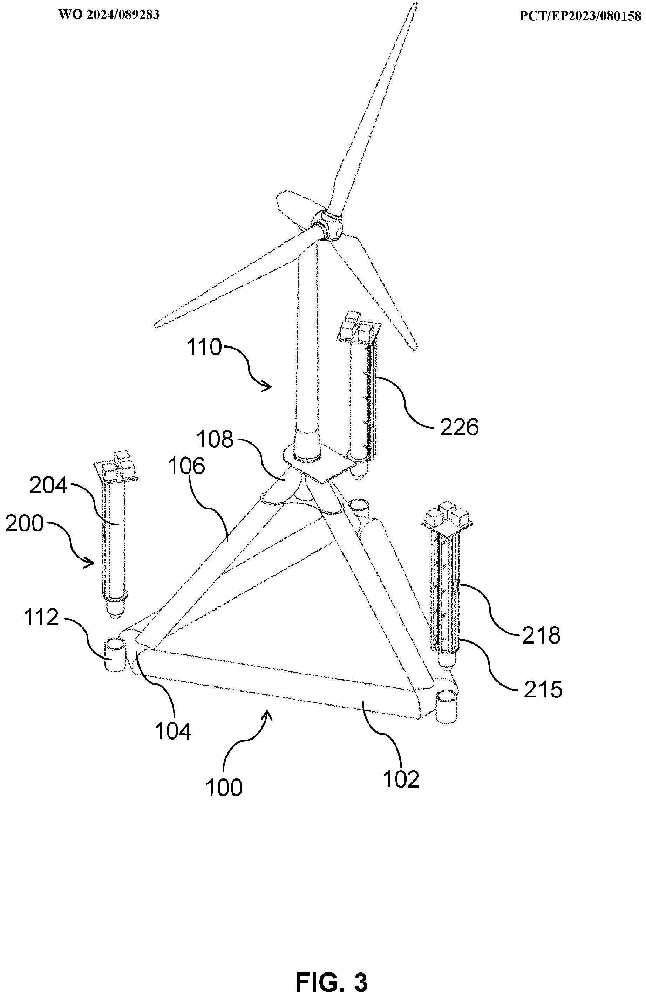

In use, a platform 100 is transported across the surface of a body of water (not shown) to a desired location for deployment. A connector 202 of the turret 200 is engaged with a corresponding socket 112 of the buoyant platform 100 floating on a surface of a body of water as shown in FIG. 3, the turret body 204 and the rail 215 thereon extending perpendicularly to a plane occupied by the triangular base portion of the platform 100, and substantially vertically relative to a surface of the body of water.

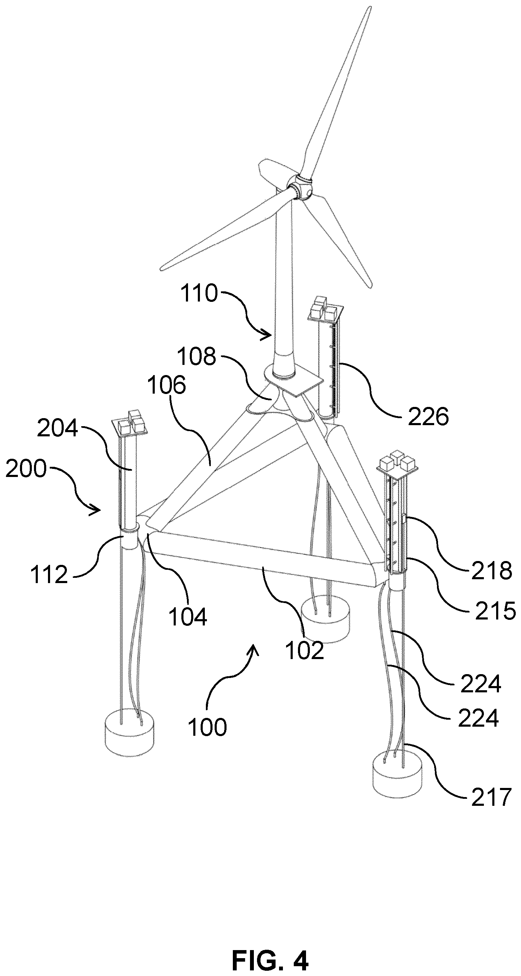

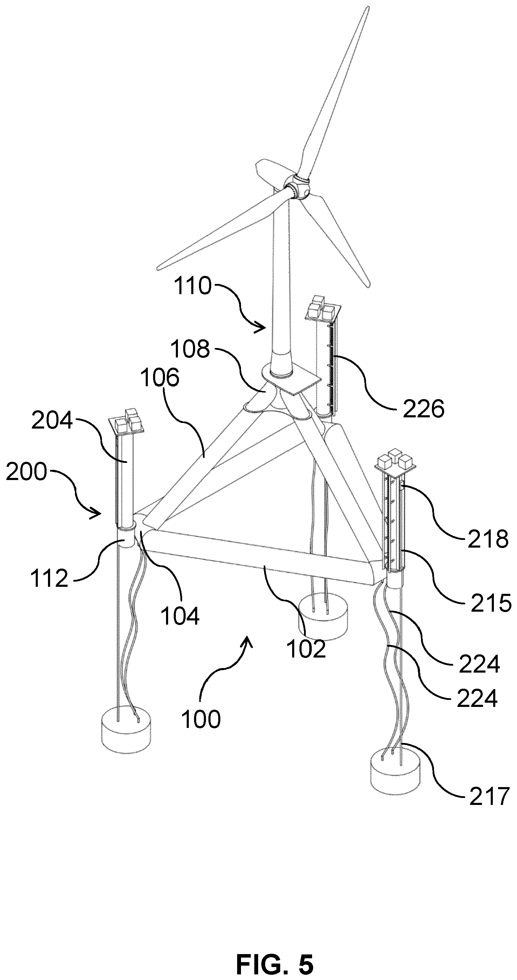

The end of the TLL 217 distal to the tensioning member 218 is affixed to the bed of a body of water supporting the buoyant platform 100 on a surface thereof. Power is supplied to the motor of the tensioning member 218, which accordingly is driven along the rail 215 from the second position 222 to the first position 220 pulling the TLL 217 to apply tension thereto and cause the base portion of the platform 100 to be submerged beneath the surface of the body of water, as shown in FIGs. 4 and 5. The length of movement of the tensioning member 218 determines the depth of submergence of the base portion of the platform 100, which in the example shown is substantially equal to the distance between the first position 220 and the second position 222. This depth of submergence, in the example shown, is an operating depth of the platform 100 at which the platform 100 is deployed to achieve a submerged operating configuration.

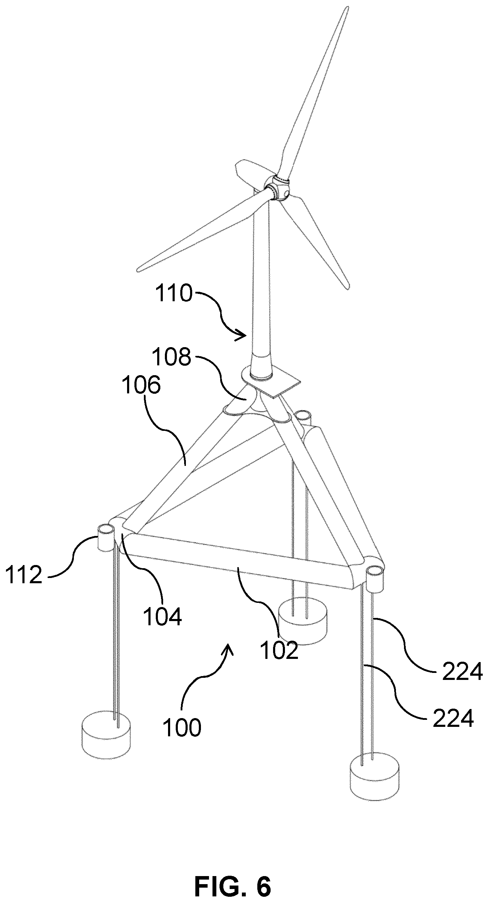

Once at the submerged operating depth, the platform 100 is secured to the bed of the body of water by affixing fixed-length mooring lines 224 between the platform and the bed of the body of water. Thereafter the TLL 217 may be detached from the bed of the body of water, optionally following movement of the tensioning member 218 a short distance from the first position 220 toward the second position 222 in order to release tension in the TLL 217, and the connector 202 may be disengaged from the corresponding socket 112, providing a deployed platform as shown in FIG. 6. In the submerged operating configuration, the buoyancy of the platform 100 confers stability to a renewable energy system supported thereon during operation in converting captured energy, for example wind or wave energy, to useful energy, for example electrical energy.

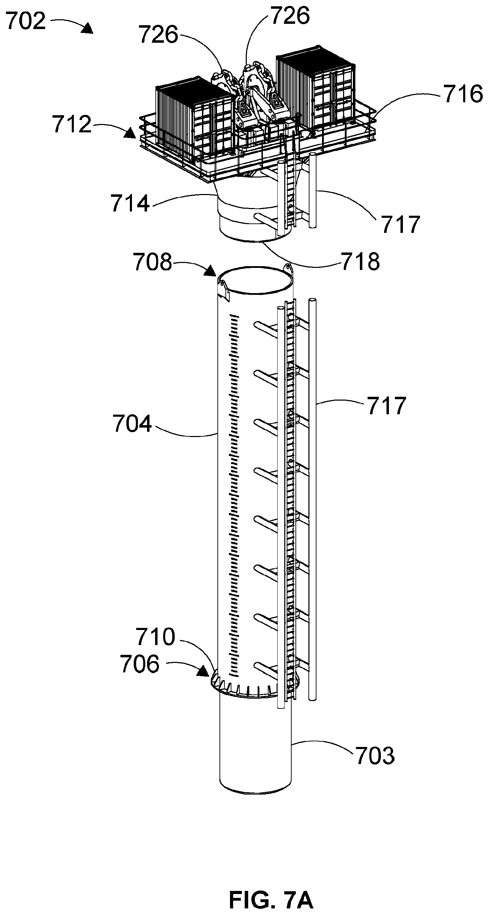

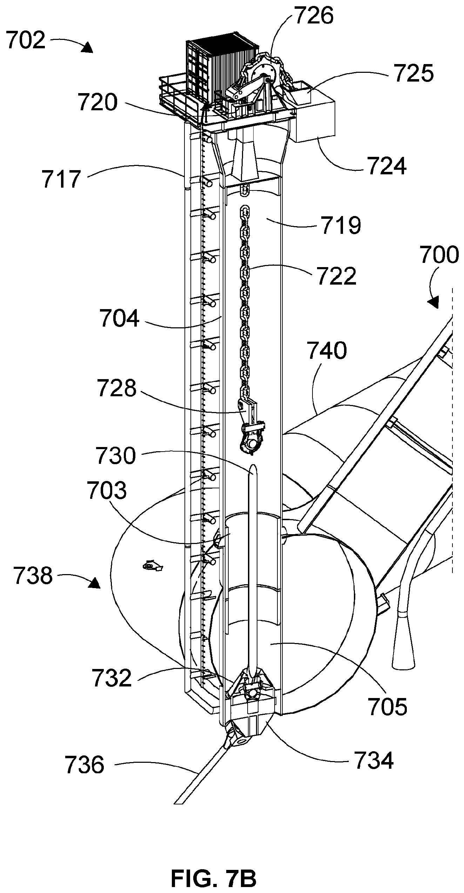

Referring to FIG. 7A, an exploded view of a further example embodiment 702 of a deployment device in accordance with the first aspect is shown. In the example 702 shown, the deployment device 702 comprises a turret having an elongate cylindrical turret body 704 having a first end 706 and a second end 708. Extending from the turret body 704 at the first end thereof 706 is a platform connector 703. In the embodiment shown, the platform connector 703 comprises a substantially cylindrical protrusion extending from the first end 706 of the turret body 704. The body of the platform connector 703 extends along the same plane at the turret body 704 and is substantially coaxial therewith. The body of the connector 703 is shaped to engage a corresponding socket 705 of an offshore renewable energy system mounting platform 700 in a complementary fashion, as shown in the cutaway view of FIG. 7B, in order to facilitate subsequent disengagement of the connector 703 from the socket 705. In the example shown, the connector 703 is further shaped to provide a snug fit within the socket 705, maximising the surface area of mating surfaces between the socket 705 and the connector 703 such that lateral and pitching movement of the connector 703 within the socket 705 is inhibited.

Positioned at the interface between the connector 703 and the turret body 704 is a circular radial flange 710 extending outwardly from the turret body 704 and perpendicular to the longitudinal axis thereof. The flange 710 comprises a substantially planar lower surface. In the example shown, the planar lower surface of the flange 710 is arranged to engage with an upper surface of a wall of the socket 705 of a platform 700 during engagement of the connector 703 with said socket 705. Said engagement between the flange 708 and the socket 705 acts to inhibit further movement of the connector 703 into the socket 705 while also preventing pitching movement of the connector 703, and therefore the turret body 704, while the connector 703 is fully engaged with the socket 705.

Extending along the turret body 704 are landing features 717 suitable for engagement of the device 702 with a marine vessel (not shown), the landing features 717 comprising an elongate railing separated from the turret body 704 by corresponding bracket features.

The deployment device 702 further comprises a top member 712 having a cylindrical top member body 714, the top member body 714 having substantially the same diameter as the cylindrical turret body 704. The top member body 714 comprises landing features 717 corresponding to the landing features of the turret body 704 and are configured to provide a continuation thereof. At an upper end of the top member body 714 is supported a planar rectangular platform 716. Extending from an end of the top member body 714 distal to the planar platform 716 is a connector 718 shaped to engage the second end 708 of the turret body 704 and affix the top member 712 to the turret body 704.

Supported atop the platform 716 is a mooring line tensioning member 720, which in the example embodiment shown takes the form of a dual hydraulic chain jack 720, but it will be appreciated that any suitable tensioning device may be used as described herein. In communication with the chain jack 720 are two flexible chains 722. The top member 712 comprises a box-shaped chain compartment 724 for housing slack portions of the chains 722. The chain compartment 724 comprises a mouth 725 through which the two chains 722 extend, the two chains 722 being guided out of the compartment 724 through the mouth 725 to the chain jack 720 by a rotating sprocket 726. In the example embodiment shown, at a terminal end of the two chains 722 is a Y-connector 728 connecting the two chains 722 to a first end of an extender line 730. In the embodiment shown, the extender line 730 extends from the Y- connector 728 to a temporary mooring line connector 732, the temporary connector 732 arranged to engage a permanent mooring line connector 734 in a detachable manner such that during disconnection of the device 702 from the platform 700, the temporary connector may be disengaged from the permanent connector 734. In the embodiment shown, the permanent connector 734 is affixed to a plurality of mooring lines 736 which extend between the connector 734 and a bed of a body of water, to which the mooring lines 736 are anchored. The permanent connector 734, in the embodiment shown, is arranged to be affixed to the platform 700 beneath the device 702. Embodiments will be appreciated wherein the connection between the temporary mooring line connector 732 and the permanent mooring line connector 734 may take the form of any suitable temporary connection, such as, for example, a lifting eye and hook, a shackle, or any other suitable connection system as will be appreciated.

The top member body 714 and the turret body 704 comprise an inner elongate channel 719 extending between the platform 716 and the lowermost end of the platform connector 703, along which the chains 722 and extender line 730 are arranged to extend.

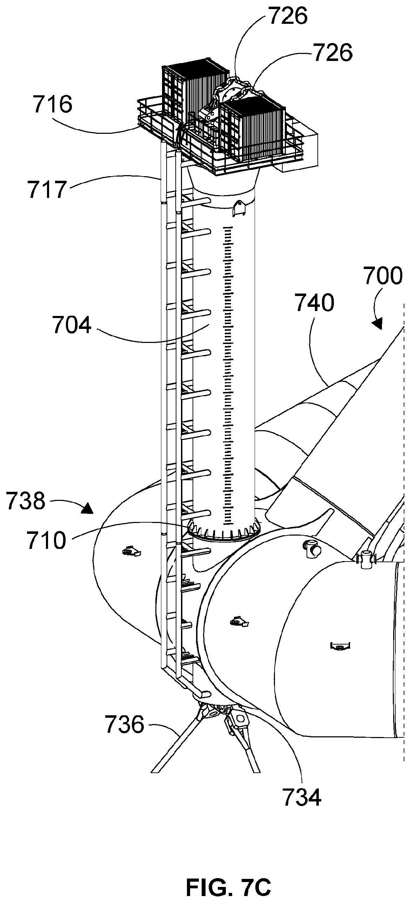

In use, the device 702 is connected to the socket 705 of the buoyant platform 700 when the platform 700 is floating on the body of water, and the chains 722 and extender line 730 are lowered through the socket 705 of the platform 700 and further lowered within the body of water, such that the temporary connector 732 can engage the permanent connector 734 affixed to the anchored mooring lines 736. The two chains 722 are then partially retracted, whether by the chain jack 720 or by any other motorised means, such as motorised movement of the sprocket 726, until the mooring lines 736 are pulled taught against their respective anchoring points in the bed of the body of water. The chain jack 720 is then arranged to apply a tensioning force to the two chains 722 such that the floating platform 700 is gradually submerged within the body of water toward the permanent connector 734 of the mooring lines 736, to achieve a configuration as shown in the cutaway view of FIG. 7B and the perspective view of FIG. 7C. The anchored mooring lines 736 and permanent connector 734 therefore define an operating depth of the buoyant platform 700, at which the permanent connector 734 is affixed to a corresponding engagement region of the platform 700, which in the embodiment shown is directly beneath the device 702 and coaxially aligned with a longitudinal axis thereof. At the operating depth shown in FIG. 7C, the platform 716 of the top member 712, and therefore the machinery supported thereon, remains above the surface of the body of water. The temporary connector 732 is then disengaged from the permanent connector 734 and the device 702 disengaged from the socket 705, and can be used in the deployment of further said platforms 700.

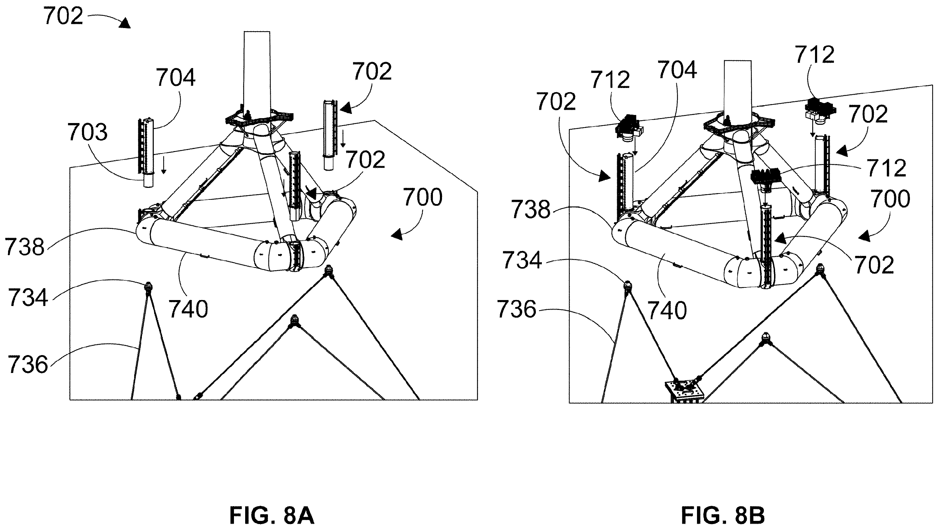

FIG. 8A to FIG. 8G show an example platform deployment sequence for a buoyant tetrahedral platform 700 having three base vertices 738 formed at intersections of adjacent buoyant lateral braces 740 of the platform 700, the platform 700 deployed using the embodiment 702 described in relation to FIG. 7A to 7C, and the same numbering will be used where appropriate. The buoyant platform 700 is positioned with each vertex above a respective permanent mooring line connector 734. Each mooring line connector 734 is affixed to a first end of two mooring lines 736 which extend between the connector 734 and a respective anchoring point 738 on a bed of a body of water. In the particular example shown, the permanent connectors 734 are shown as being buoyant, but any suitable means of manoeuvring the connectors 734 to the positions shown will be appreciated. As shown in FIG. 8A, each vertex of the three vertices of the platform 700 comprises a corresponding deployment device socket 705. For each socket 705, the platform connector 703 of the turret body 704 of a respective device 702 is engaged with the socket 705 in the manner described. The particular manner of transport and manoeuvring of the deployment device 702 for engagement with the socket 705 is not shown and any suitable manner of transport and manoeuvring will be appreciated, such as using a corresponding marine vessel having appropriate machinery thereon. The devices 702 are shown for simplicity being engaged simultaneously, but it will be appreciated that for logistical regions, the devices 702 may be engaged with the platform 700 sequentially.

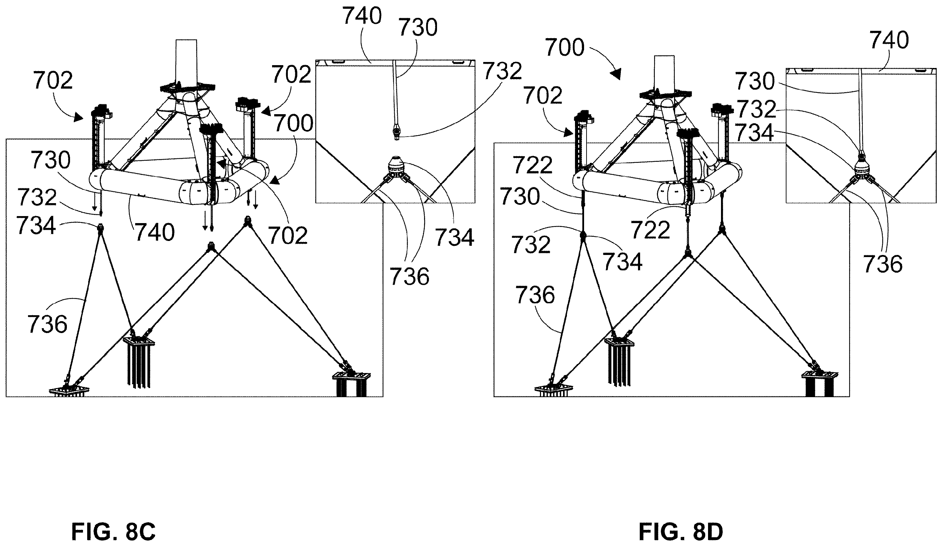

In the embodiment shown, following engagement of the turret body 704 with the corresponding socket 705, the top member 712 of each device 702 is engaged with the respective turret body 704 as shown in FIG. 8B, and the chains 722 and extender line 730 are extended along the channel 719 within the turret body 704 and through bottom of the corresponding platform vertex, such that the temporary connector 732 positioned at the end of the extender line 730 is moved proximate the corresponding permanent mooring line connector 734, as shown in FIG. 8C. As shown in FIG. 8D, each temporary connector 732 is then moved into engagement with the corresponding permanent mooring line connector 734, which in the example shown is performed by a remote operated submersible device, but any suitable means will be appreciated.

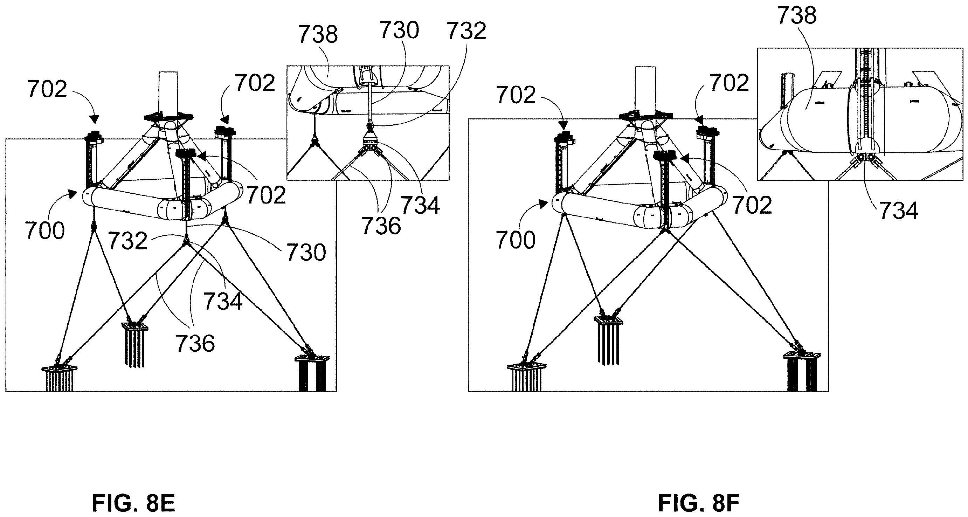

The chain jack 720 of the device 702 then applies a tensioning force to the respective chains 722 such that the platform 700 is gradually submerged in the body of water as shown in FIG. 8E. The platform 700 is submerged until the permanent mooring line connectors 734 can be engaged with the corresponding engagement region on the respective vertex of the platform 700 as shown in FIG. 8F, at an operating depth of the platform 700 at which the platform 716 of the top member remains above the surface of the body of water as shown. The engagement is shown in FIG. 8F as being performed by a remote operated submersible device, but any suitable means will be appreciated.

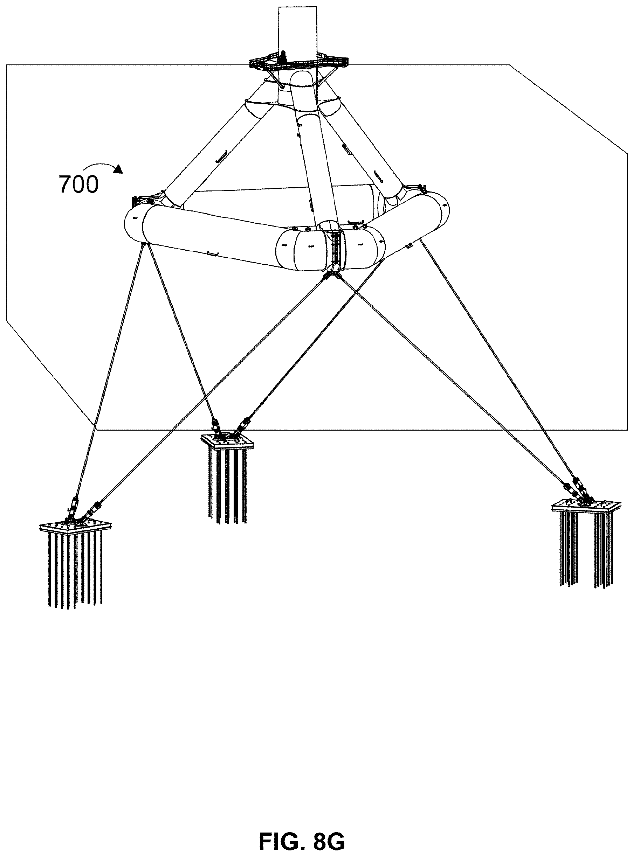

The temporary connectors 732 are then disengaged from the corresponding permanent mooring line connectors 734. The top member 712 is removed from the respective turret body 704, which is then subsequently removed from the respective platform socket 705, leaving the buoyant platform 700 deployed at the operating depth as shown in FIG. 8G.

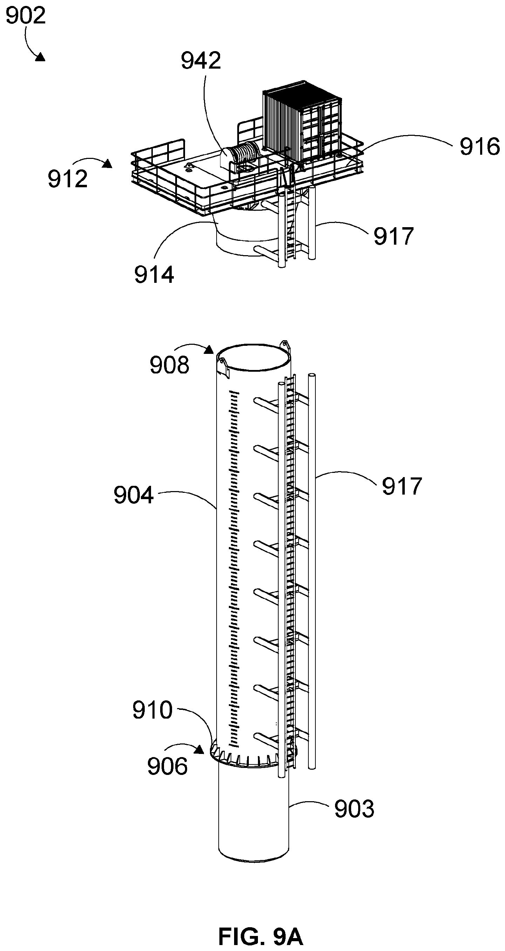

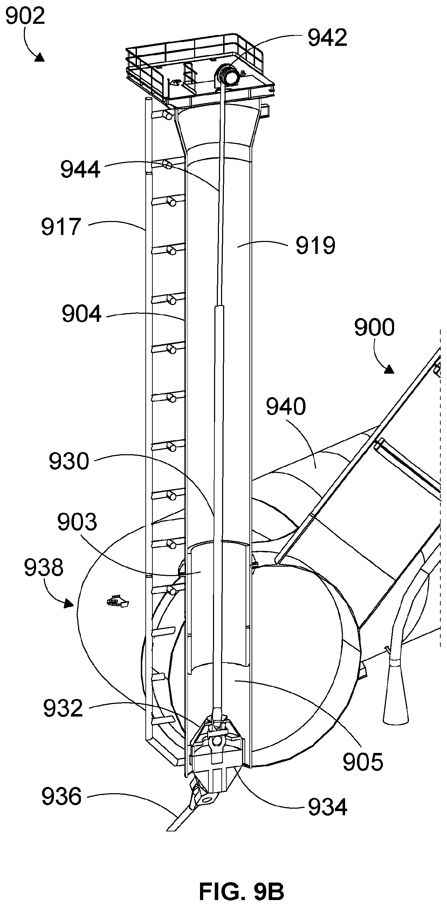

Referring to FIG. 9A, an exploded view of a further example embodiment 902 of a deployment device in accordance with the first aspect is shown. The embodiment 902 shown in FIG. 9A and FIG. 9B is similar to the embodiment 702 described in relation to FIG. 7A to FIG. 7C and corresponding numbering of features 700 to 740 is replaced with the numbering 900 to 940 in FIG. 9A and FIG. 9B where appropriate. In the further embodiment 902 of FIG. 9A and FIG. 9B, the device 902 comprises a lower duty tensioning means, comprising a powered winch 942 in place of the chain jack 722 and sprocket 726 mechanism of the earlier embodiment 702. Any suitable tensioning means will be appreciated, such as described herein. The embodiment 902 may be used in suitable applications wherein any suitable ballast mass may be applied to the buoyant platform 900, such that a weight of the ballast mass acts downwardly on the buoyant platform 900 during the application of the tensioning force by the powered winch. As such, the weight of the ballast mass acts in support of the tensioning action of the tensioning member, which in the example embodiment shown is a powered winch 942. Therefore, a lower duty tensioning member is required which may reduce cost and complexity of the device 902. As shown in FIG. 9A and in the cutaway view of FIG. 9B, the tensioning member is shown as a powered winch 942. In the particular example shown, the ballast mass is provided in the form of seawater pumped into a cavity (not shown) comprised within the lateral braces 940 of the platform 900. Prior to said pumping, the cavity of the lateral braces, in the embodiment shown, is filled with air which provides, or contributes to, the net buoyancy of the platform shown. During pumping of seawater into the cavity, the air is displaced and/or vented from the cavity, thereby reducing the net buoyancy of the platform 900. In the particular example 902 shown, the device 902 further comprises a pump (not shown) for pumping the sea water into and out of the cavity of each of the lateral braces 940 of the platform. In use, the device 902 would be engaged with the platform 900 substantially as described herein in relation to the earlier embodiment 702. In the example shown, either before or after lowering of the winching line 944 and extender line 930 and subsequent engagement of the temporary connector 932 with the corresponding permanent mooring line connector 934, the pump is arranged to pump sea water into the lateral braces 740 of the platform 900, thereby providing the ballast mass for supporting the tensioning action of the winch 942. In preferable embodiments the lowering of the winching line 944 and extender line 930 and subsequent engagement of the temporary connector 932 with the corresponding permanent mooring line connector 934 is performed before the pumping of the seawater, or any suitable ballasting fluid, into the lateral braces 940 of the platform 900. The winch 942 applies and maintains a tensioning force to the winching line 944 spooled thereabout throughout the addition of the ballast mass in order to keep the submerging platform under control throughout, and in order to retract the extender line 930 extending therefrom and submerge the platform 900 as previously described. At the operating depth and following engagement of the permanent mooring line connector 934 with the corresponding engagement region of the platform vertex, the ballast mass may then be removed, which in the example 902 shown involves the pumping by the pump of the seawater out of the lateral braces 940 of the platform 900, the seawater being displaced by air, thereby increasing the net buoyancy of the platform 900. The removal of the ballast mass once the platform is at the operating depth allows the full buoyancy of the buoyant platform 900 to act against the tension of the mooring lines 936 in order to provide maximum stability to the platform 900 in the body of water.

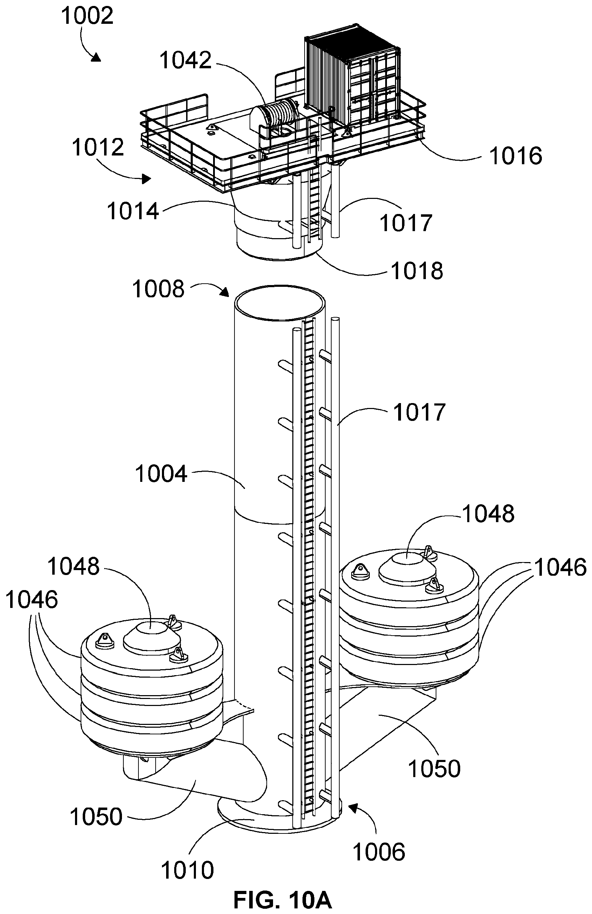

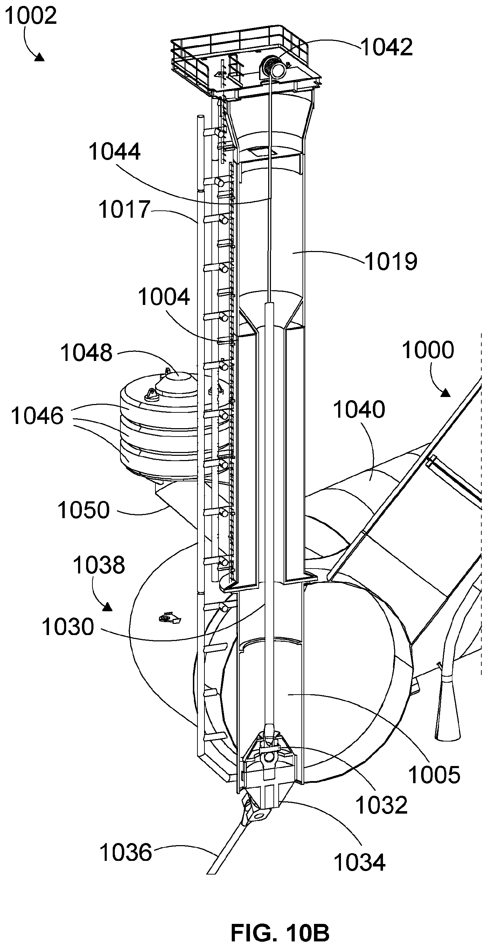

Referring to FIG. 10A, an exploded view of a further example embodiment 1002 of a deployment device in accordance with the first aspect is shown. The embodiment 1002 shown in FIG. 10A and FIG. 10B is similar to the embodiments 702, 902 described in relation to FIG. 7A to FIG. 7C, and FIG. 9A and FIG. 9B, and corresponding numbering of features 700 to 740 and 942 and 944 will be replaced with the numbering 1000 to 1044 in FIG. 10A and FIG. 10B where appropriate. In the further embodiment 1002 shown, a ballast mass is employed similar to the embodiment 902 previously described in relation to FIG. 9A and FIG. 9B, thereby permitting a lower duty tensioning member, which in the example shown is a powered winch 1042. Any suitable tensioning means will be appreciated, such as described herein. In the further embodiment 1002 shown in FIG. 10A and FIG. 10B, the ballast mass is applied to the device 1002 itself. In the particular example 1002 shown, the ballast mass takes the form of a plurality of weighted discs 1046 supported on a corresponding support rod 1048 of a pair of support rods 1048, each support rod 1048 extending parallel to the turret body 1004. Each of the pair of support rods 1048 extends from a corresponding bracket 1050 of a pair of opposing said brackets 1050 protruding from opposing points on the turret body 1004 and in opposing directions. As such, when each support rod 1048 supports an equal number of weighted discs 1046, the ballast mass is balanced about the central axis of the turret body 1004. The balancing of the ballast mass in this way, in the particular example 1002 shown, is key to ensuring stability of the platform 1000 and the device 1002 throughout deployment of the platform 1000. A thicker wall is used for the portion of the turret body 1004 proximate the brackets 1050, which preferably provides greater support to said portion when the ballast discs are supported on the corresponding rods. In use, the device 1002 would be engaged with the platform 1000 substantially as described herein in relation to the earlier embodiment 702. In the example shown, either before or after engagement of the temporary connector 1032 with the corresponding permanent mooring line connector 1034, the weighted discs 1046 are sequentially added to the corresponding support rods 1048 until each support rod 1048 comprises a full complement of weighted discs 1046 as shown in FIG. 10A and FIG. 10B. The winch 1042 applies and maintains a tensioning force to the winching line 1044 spooled thereabout throughout the addition of the ballast mass in order to keep the submerging platform under control throughout, and in order to retract the extender line 1030 extending therefrom and submerge the platform 1000 as previously described. At the operating depth and following engagement of the permanent mooring line connector 1034 with the corresponding engagement region of the platform vertex, the ballast mass may then be removed, which in the example 1002 shown either involves: the successive removal of the weighted discs 1046 from the corresponding support rod 1048, followed by the disengagement of the remaining portions of the device 1002 from the platform 1000 as previously described; or the disengagement of the ballasted device 1002 from the platform 1000. As discussed, the removal of the ballast mass once the platform is at the operating depth allows the full buoyancy of the buoyant platform 1000 to act against the tension of the mooring lines 1036 in order to provide maximum stability to the platform 1000 in the body of water.

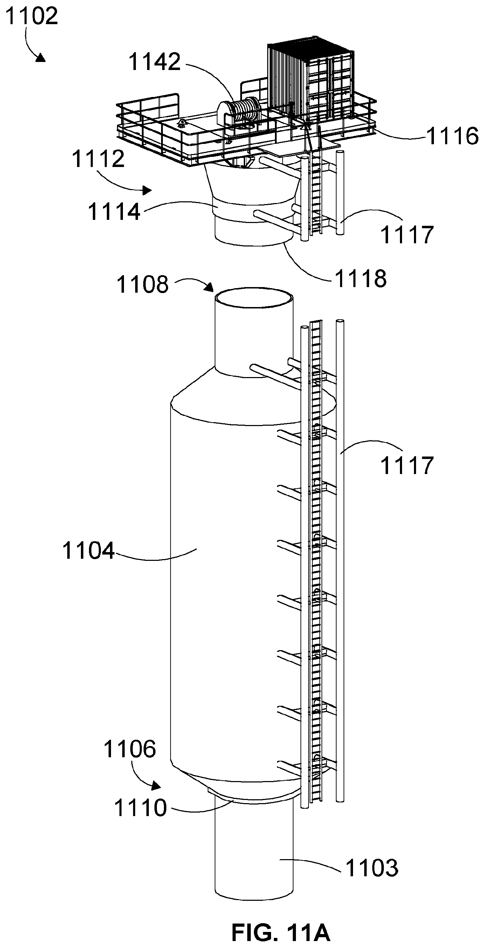

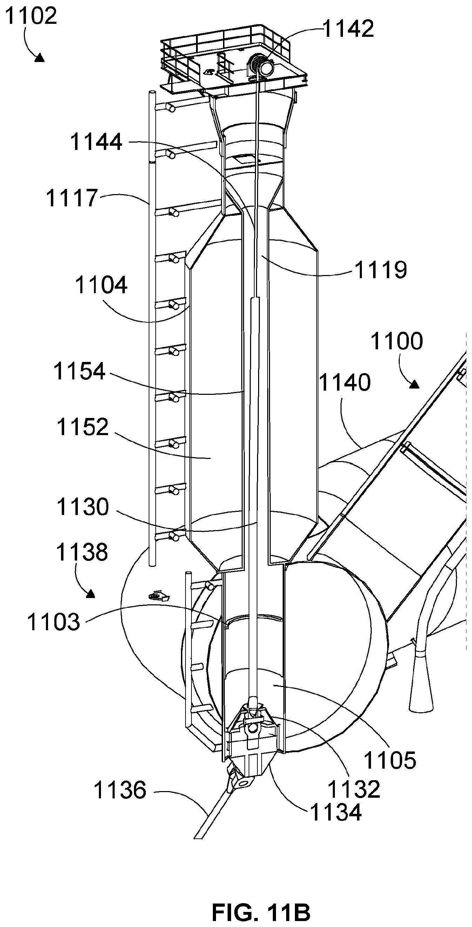

Referring to FIG. 11A, an exploded view of a further example embodiment 1102 of a deployment device in accordance with the first aspect is shown. The embodiment 1102 shown in FIG. 11A and FIG. 11B is similar to the embodiments 702, 902 described in relation to FIG. 7A to FIG. 7C, and FIG. 9A and FIG. 9B, and corresponding numbering of features 700 to 740 and 942 and 944 will be replaced with the numbering 1100 to 1144 in FIG. 11A and FIG. 11B where appropriate. In the further embodiment 1102 shown, a ballast mass is employed similar to the embodiment 902 previously described in relation to FIG. 9A and FIG. 9B, and the embodiment 1002 previously described in relation to FIG. 10A and FIG. 10B, thereby permitting a lower duty tensioning member, which in the example shown is a powered winch 1142. Any suitable tensioning means will be appreciated, such as described herein. In the further embodiment 1102 shown in FIG. 11A and FIG. 11B, the ballast mass is applied to the device 1102 itself. In the particular example 1102 shown, the turret body 1104 comprises a cavity 1152 located about the central channel 1119 and isolated therefrom by a dividing wall 1154. The turret body 1104 further comprises a pumping port (not shown) through which a fluid ballast mass may be pumped into and out of the cavity 1150. In the particular example 1102 shown, the fluid ballast mass is slurry, but any suitable fluid ballast mass may be envisaged. A longer platform connector 1103 is provided in ballasted embodiments such as this, which may act to provide greater support and stability against any pitching movement of the ballasted turret in use. In use, the device 1102 would be engaged with the platform 1100 substantially as described herein in relation to the earlier embodiment 702. In the example shown, either before or after engagement of the temporary connector 1132 with the corresponding permanent mooring line connector 1134, the fluid ballast mass is pumped (whether by a pump on the device 1102 or a pump separate to the device 1002, for example on a marine vessel transporting the fluid ballast mass) into the cavity 1152, thereby providing the ballast mass for supporting the tensioning action of the winch 1142. The winch 1142 applies and maintains a tensioning force to a winching line 1144 spooled thereabout throughout the addition of the ballast mass in order to keep the submerging platform under control throughout, and in order to retract the extender line 1130 extending therefrom and submerge the platform 1100 as previously described. At the operating depth and following engagement of the permanent mooring line connector 1134 with the corresponding engagement region of the platform vertex, the ballast mass may then be removed, which in the example 1102 shown involves the pumping, using the particular method of pumping chosen, of the fluid ballast mass - which in the particular embodiment 1002 shown is slurry - out of the cavity 1152. As described, the removal of the ballast mass once the platform is at the operating depth allows the full buoyancy of the buoyant platform 1100 to act against the tension of the mooring lines 1136 in order to provide maximum stability to the platform 1100 in the body of water.

It will be appreciated that the deployment sequence depicted in, and described in relation to, FIG. 8A to FIG. 8G is suitable for use in deploying platforms using the embodiments depicted in, and described in relation to, FIG. 9A to FIG. 11B, modified as appropriate to account for the features of the respective embodiment.

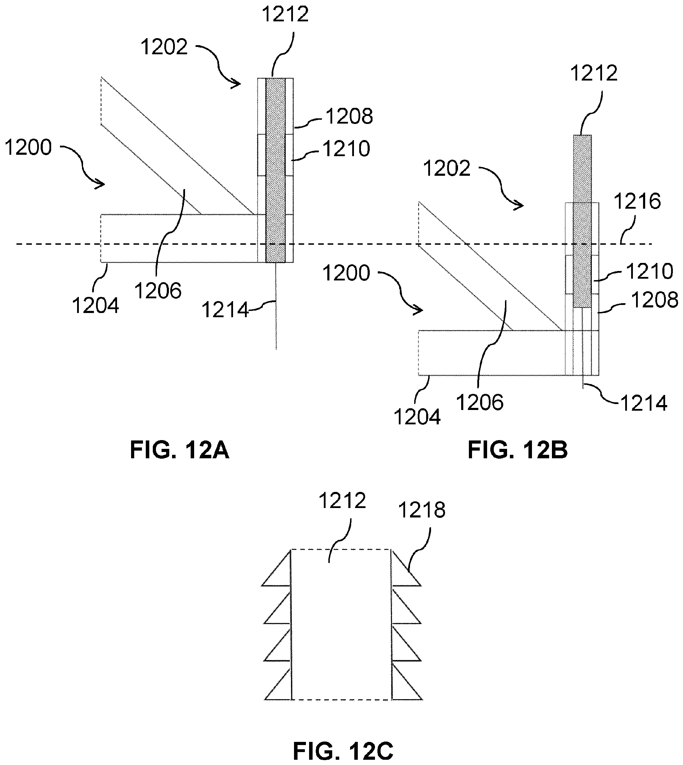

Referring to FIG. 12A to 12B, a front cutaway view of a further example embodiment of a deployment device 1202 in accordance with the first aspect in communication with a platform 1200 in accordance with the second aspect. Shown in the cutaway view of FIG. 12A and 12B is one vertex of the platform 1200 formed at the intersection of a lateral brace 1204 and a diagonal brace 1206 as described herein providing a complementary socket for receiving a deployment device 1202. The deployment device 1202 in the embodiment shown comprises a turret body 1208 having an interior channel extending therealong. The device 1202 further comprises a mooring line tensioning member 1210 comprising opposing powered cogs (not shown) each engaged at a corresponding side of a rigid actuating member 1212. Teeth of the cogs of the mooring line tensioning member 1210 are engaged with corresponding protrusions extending along the exterior surface of the rigid actuating member 1212. Extending from a lower end of the rigid actuating member 1212 is a temporary lowering line 1214 substantially as described herein. In use the rotation of the cogs of the mooring line tensioning member 1210 act to move the rigid actuating member 1212 perpendicular to the base of the platform 1200 formed by the lateral braces 1204 thereof by way of engagement with the protrusions 1218 of the rigid actuating member 1212. The movement of the rigid actuating member 1212 applies a tensioning force to the temporary lowering line 1214 thereby urging the platform 1200 beneath the surface 1218 of the body of water in which it is to be deployed. FIG. 12C shows a close up partial view of the rigid actuating member 1212 of the embodiment shown in FIG. 12A and FIG. 12B. As shown more clearly in FIG. 12C, the rigid actuating member 1212 comprises protrusions 1218 positioned therealong, the protrusions 1218 arranged to be engaged by the mooring line tensioning member 1210 in moving the rigid actuating member 1212 as shown in FIG. 12A and FIG. 12B to apply the tensioning force to the temporary lowering line 1214. Once submerged, the device 1202 may be disengaged from the platform 1200 in any suitable manner such as that disclosed herein. The embodiment 1202 will be understood with reference to the disclosure herein and any suitable rigid actuating member and corresponding mooring line tensioning member will be envisaged, for example any suitable indexing jack and indexed member or climbing jack and corresponding climbing ladder. The movement of the actuating member may include a rotational component, for example in embodiments wherein the actuating member moves by way of screw action.

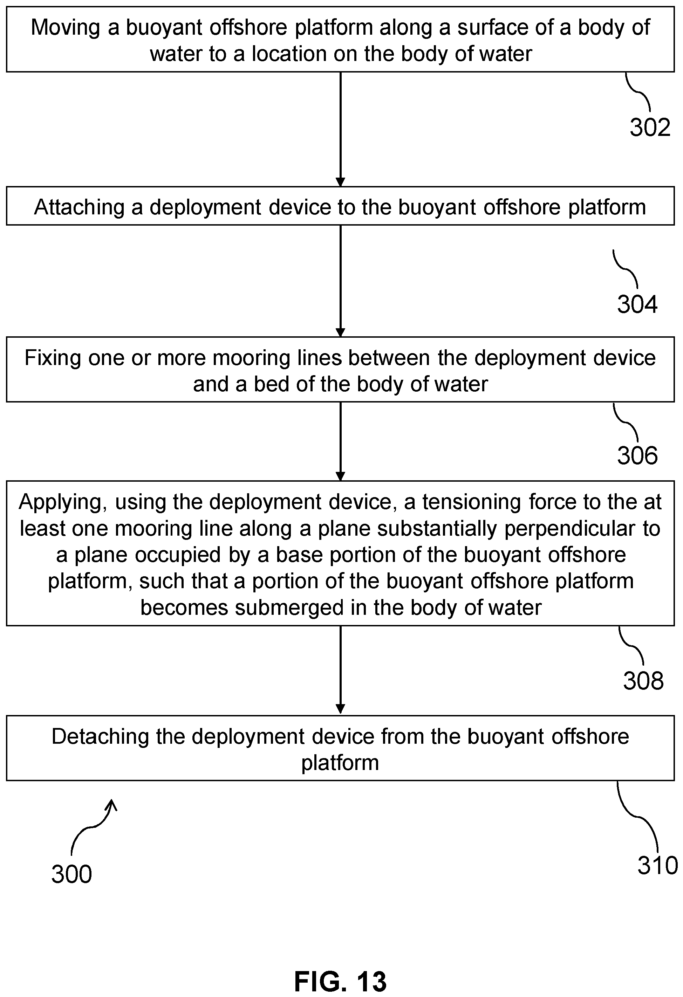

Referring to FIG. 13, the example steps of an embodiment of a method 300 in accordance with the third aspect are provided in lines with the steps depicted in FIGs. 3 to 6, the steps comprising: moving a buoyant offshore platform along a surface of a body of water to a location on the body of water 302;
attaching a deployment device to the buoyant offshore platform 304;
fixing one or more mooring lines between the deployment device and a bed of the body of water 306;
applying, using the deployment device, a tensioning force to the at least one mooring line along a plane substantially perpendicular to a plane occupied by a base portion of the buoyant offshore platform, such that a portion of the buoyant offshore platform becomes submerged in the body of water 308;
affixing at least one fixed-length mooring line between the buoyant offshore platform and the bed of the body of water 310; and
detaching the deployment device from the buoyant offshore platform 312.

It will be understood that the above steps may be performed in any suitable order, for example the deployment device attached to the buoyant offshore platform 304 may be preinstalled prior to moving the platform to the location on the body of water 302.

It will be appreciated that the above described embodiments are given as examples only and that alternatives are also considered within the scope of the disclosure. For example, the tensioning member has been described in some embodiments as using motorised movement along the rail, which can take the form of any suitable motorised movement as will be appreciated. Embodiments will be appreciated wherein any suitable application of a tensioning force, in a direction perpendicular to a plane occupied by a base portion of the engaged platform (effectively substantially vertical movement), is used. Such a force is distinguished from a tensioning force applied in an oblique/angular direction relative to said plane, and can in some case be considered distinguished from a rotational force such as that applied by a winch. The tensioning force in some embodiments is preferably provided by movement of the tensioning member in a direction of said force. In some embodiments, the movement of the tensioning member may be driven by a motor, and/or may be supported by a weight provided by one or more ballasts. In some examples, the application of the tensioning force may not require movement of the whole tensioning member along a rail, for example using the ratcheting action of a chain jack tensioning member or similar ratcheting device for use with any suitable mooring line arrangement. In such an example, the whole tensioning member does not change position relative to the body portion, but wherein the at least one mooring line moves relative to the body portion, along said plane, the body portion moving between the first undeployed position and the second deployed position. In such embodiments, an initial, for example motorised or ballasted (using one or more ballast members), movement of the chain jack along the rail may be used to apply an initial tensioning force to the mooring lines, effectively tautening the mooring lines against their opposing fixing adjacent the bed of the body of water. In such examples, a subsequent tension or pulling force may be applied to mooring lines by the chain jack, for example in a ratcheting manner and without further movement of the chain jack along the rail. Said subsequent tension or pulling force may in such embodiments cause the submerging of the platform toward the submerged operating depth. In some embodiments, the deployment device, for example the turret embodiment described, may provide a buoyancy force independent to that provided by a platform, for example by one or more buoyancy members affixed to the deployment device. Such buoyancy may for example improve stability during deployment or transport. Additional stability during deployment or transport may be provided by one or more movement stabilisers located on the deployment device, for example moveable fins or limb members arranged to move laterally or rotationally relative to the rest of the deployment device, for example to react to dynamic waves forces acting thereon. Some embodiments are depicted wherein the tensioning member is dual/twin chain jack. Embodiments will be appreciated wherein the tensioning member is any suitable member such as a strand jacks or jacking legs. The tensioning member may apply tension to two tensioning lines as depicted in some embodiments, but other embodiments will be appreciated wherein the tensioning member may comprise a plurality of separate tensioning members per deployment device, and may depend on a desired application. Some embodiments are described herein wherein the at least one mooring line of the deployment device comprises a tensioning line (for example one two chains or a winching line) and an extender line. Embodiments will be appreciated wherein the at least one mooring line of such embodiments may be any suitable combination of lines or a single line.

## Claims

1. A deployment device (200) for use in deploying an offshore renewable energy system mounting platform (100) to a submerged operating configuration, the deployment device (200) comprising:
a body portion comprising a platform engaging portion (202), the platform engaging portion (202) arranged to fixably engage a corresponding portion (112) of an offshore renewable energy system mounting platform (100); and
a mooring line tensioning member (218) coupled to the body portion;
wherein the platform engaging portion (202) is further arranged to disengage from the corresponding portion (112) of the platform (100);
wherein, in use when the platform engaging portion (202) is engaged with the corresponding portion (112) of the platform (100), the mooring line tensioning member (218) is arranged to apply a tensioning force to at least one mooring line along a plane substantially perpendicular to a base of said platform, wherein under said tensioning force the body portion is arranged to move relative to the at least one mooring line from a first undeployed position to a second deployed position; and
wherein the body portion comprises:
an elongate turret affixed to the platform engaging portion (202), the turret comprising: an elongate turret body (204) having a first end, and a second end distal to the first end.

2. A deployment device (200) as claimed in claim 1, wherein the mooring line tensioning member (218) comprises a tensioning line in communication therewith, the tensioning line having an end arranged to releasably engage a first end of the at least one mooring line, said mooring line affixed to a bed of a body of water;
preferably wherein when the tensioning line is engaged with said mooring line, the mooring line tensioning member (218) is arranged to apply the tensioning force to the tensioning line such that the body portion moves from the first undeployed position to the second deployed position; and
preferably wherein the mooring line tensioning member (218) and corresponding tensioning line are selected from the group:
- a chain jack and corresponding chain;
- a strand jack and one or more corresponding wire strands;
- a winch and corresponding flexible line.

3. A deployment device (200) as claimed in claim 1, wherein the mooring line tensioning member (218) comprises a rigid actuating member having an end arranged to releasably engage a first end of the at least one mooring line of said offshore renewable energy system mounting platform, said mooring line affixed to a bed of a body of water; preferably wherein when the rigid actuating member is engaged with said mooring line, the mooring line tensioning member is arranged to move the rigid actuating member to apply the tensioning force to the mooring line, such that the body portion moves from the first undeployed position to the second deployed position; and preferably wherein the mooring line tensioning member and corresponding rigid actuating member are selected from the group:
- a climbing jack and corresponding climbing ladder;
- an indexing jack and corresponding indexed member.

4. A deployment device (200) as claimed in any one of the preceding claims, said tensioning force is arranged to move the body portion a distance along said plane, said distance equal to a distance between the first undeployed position and the second deployed position; and/or wherein the tensioning member is arranged to move relative to the body portion along said plane, between the first undeployed position, and the second deployed position, such that the tensioning force is applied to the at least one mooring line along said plane.

5. A deployment device (200) as claimed in any one of the preceding claims wherein the platform engaging portion (202) is located on the turret body proximate the first end of the turret body;
preferably wherein the platform engaging portion (202) is shaped to engage a corresponding connector (112) on the platform;
preferably wherein the platform engaging portion (202) comprises a plug member extending from the first end of the turret body, the plug member having a first end proximate the turret body and second end distal to the turret body, wherein the second end of the plug member is arranged to engage a corresponding socket of the platform, said engagement inhibiting lateral movement of the plug member relative to the socket; and
preferably wherein the plug member further comprises a flange radiating from proximate the first end thereof, the flange arranged to limit further insertion of the plug member into said socket.

6. A deployment device (200) as claimed in any one of the preceding claims, wherein the turret body further comprises one or more landing features position along the length thereof, said landing features arranged to permit engagement of the turret to one or more marine vessels.

7. A deployment device (200) as claimed in any one of the preceding claims, wherein the elongate turret further comprises a top member arranged to engage the second end of the turret body, the top member comprising a platform supporting the mooring line tensioning member thereon; and
preferably wherein at the second deployed position, the platform of the top member is arranged to remain above a surface of a body of water.

8. A deployment device (200) as claimed in any one of the preceding claims, wherein the turret body comprises a channel extending along the length thereof between the first end and the second end, and wherein at least a portion of: the at least one mooring line; the tensioning line; or the rigid actuating member; extends along said channel.

9. A deployment device (200) as claimed in any one of the preceding claims, wherein the turret body further comprises at least one ballast support member arranged to support at least one removable ballast thereon; and/or wherein the turret body further comprises a ballasting fluid compartment arranged to house a volume of ballasting fluid; wherein the turret body further comprises a ballasting fluid inlet arranged to receive the ballasting fluid into the ballasting fluid compartment; and a ballasting fluid outlet arranged to permit egress of the ballasting fluid from the ballasting fluid compartment; and
preferably wherein the deployment device further comprises a pump arranged to pump the ballasting fluid into and/or out of the ballasting fluid compartment, and/or into and/or out of a cavity located in a said offshore renewable energy system mounting platform.

10. A deployment device (200) as claimed in any one of the preceding claims, wherein the elongate turret further comprises: a rail (215) extending along a portion of the turret body; and wherein the mooring line tensioning member is affixed to the rail, the mooring line tensioning member arranged to move along the rail between the first undeployed position, and the second deployed position.

11. A deployment device (200) as claimed in any one of the preceding claims, wherein the engagement between the platform engaging portion and the platform is such that when the platform engaging portion is engaged, the turret extends substantially perpendicular to a base of said platform.

12. A deployment device (200) as claimed in any one of the preceding claims, wherein in said use, movement of the body portion toward the second deployed position is arranged to submerge said platform in said body of water to a submerged operating configuration having an operating depth.

13. A buoyant offshore platform (100) for supporting a renewable energy system in a body of water having a surface and a bed, said buoyant offshore platform comprising: a base portion for submerging below said surface of said body of water;
a top portion for remaining above said surface of said body of water; a connector positioned on the base portion or the top portion; and
a deployment device (200) according to any one of claims 1 to 12.

14. A platform (100) as claimed in claim 13,
wherein the buoyant offshore platform further comprises:
a floating configuration in which the buoyant offshore platform is positioned substantially floating on said surface of said body of water; and
a submerged operating configuration in which the base portion is submerged beneath
said surface of said body of water and the top portion remains above said surface of said body of water;
and wherein,
in said use, the tensioning force applied to the at least one mooring line is such that the buoyant offshore platform transitions between the floating configuration when the body portion is in the first undeployed position, and the submerged operating configuration when the body portion is in the second deployed position; and/or
wherein the base portion comprises at least three vertices, wherein at least said three vertices comprises a corresponding said connector; wherein the platform further comprises a number of said deployment devices equal to the number of connectors.

15. A method of deploying a buoyant offshore platform for supporting a renewable energy system, the method comprising:
moving a buoyant offshore platform along a surface of a body of water to a location on the body of water;
attaching a deployment device according to any one of claims 1 to 12 to the buoyant offshore platform;
fixing one or more mooring lines between the deployment device and a bed of the body of water;
applying, using the deployment device, a tensioning force to the at least one mooring line along a plane substantially perpendicular to a plane occupied by a base portion of the buoyant offshore platform, such that a portion of the buoyant offshore platform becomes submerged in the body of water; and
detaching the deployment device from the buoyant offshore platform.

## Patentansprüche

1. Einsatzvorrichtung (200) zur Verwendung beim Einsetzen einer Offshore-Trägerplattform für ein System für erneuerbare Energien (100) in eine getauchte Betriebskonfiguration, wobei die Einsatzvorrichtung (200) umfasst:
einen Körperabschnitt, der einen Plattformeingriffsabschnitt (202) umfasst, wobei der Plattformeingriffsabschnitt (202) dafür eingerichtet ist, mit einem korrespondierenden Abschnitt (112) einer Offshore-Trägerplattform für ein System für erneuerbare Energien (100) fest in Eingriff zu gelangen; und
ein Verankerungsleinen-Spannelement (218), das mit dem Körperabschnitt gekoppelt ist;
wobei der Plattformeingriffsabschnitt (202) ferner dafür eingerichtet ist, sich von dem korrespondierenden Abschnitt (112) der Plattform (100) zu lösen;
wobei im Gebrauch, wenn der Plattformeingriffsabschnitt (202) mit dem korrespondierenden Abschnitt (112) der Plattform (100) in Eingriff steht, das Verankerungsleinen-Spannelement (218) dafür eingerichtet ist, eine Spannkraft auf mindestens eine Verankerungsleine entlang einer Ebene aufzubringen, die im Wesentlichen senkrecht zu einer Basis der Plattform verläuft, wobei unter der Spannkraft der Körperabschnitt dafür eingerichtet ist, sich relativ zu der mindestens einen Verankerungsleine von einer ersten, nicht eingesetzten Position in eine zweite, eingesetzte Position zu bewegen; und
wobei der Körperabschnitt umfasst:
einen länglichen Turm, der an dem Plattformeingriffsabschnitt (202) befestigt ist, wobei der Turm umfasst: einen länglichen Turmkörper (204) mit einem ersten Ende und einem zu dem ersten Ende distalen zweiten Ende.

2. Einsatzvorrichtung (200) nach Anspruch 1, wobei das Verankerungsleinen-Spannelement (218) eine Spannleine in Verbindung damit umfasst, wobei die Spannleine ein Ende aufweist, das dafür eingerichtet ist, mit einem ersten Ende der mindestens einen Verankerungsleine lösbar in Eingriff zu gelangen, wobei die Verankerungsleine an einem Grund eines Gewässers befestigt ist;
vorzugsweise wobei, wenn die Spannleine mit der Verankerungsleine in Eingriff steht, das Verankerungsleinen-Spannelement (218) dafür eingerichtet ist, die Spannkraft auf die Spannleine derart aufzubringen, dass sich der Körperabschnitt von der ersten, nicht eingesetzten Position in die zweite, eingesetzte Position bewegt; und
vorzugsweise wobei das Verankerungsleinen-Spannelement (218) und die korrespondierende Spannleine ausgewählt sind aus der Gruppe:
ein Kettenheber und eine korrespondierende Kette;
ein Litzenheber und eine oder mehrere korrespondierende Drahtlitzen;
eine Winde und eine korrespondierende flexible Leine.

3. Einsatzvorrichtung (200) nach Anspruch 1, wobei das Verankerungsleinen-Spannelement (218) ein starres Betätigungselement umfasst, das ein Ende aufweist, das dafür eingerichtet ist, mit einem ersten Ende der mindestens einen Verankerungsleine der Offshore-Trägerplattform für ein System für erneuerbare Energien lösbar in Eingriff zu gelangen, wobei die Verankerungsleine an einem Grund eines Gewässers befestigt ist; vorzugsweise wobei, wenn das starre Betätigungselement mit der Verankerungsleine in Eingriff steht, das Verankerungsleinen-Spannelement dafür eingerichtet ist, das starre Betätigungselement zu bewegen, um die Spannkraft auf die damit in Eingriff stehende Verankerungsleine aufzubringen, sodass sich der Körperabschnitt von der ersten, nicht eingesetzten Position in die zweite, eingesetzte Position bewegt; und vorzugsweise wobei das Verankerungsleinen-Spannelement und das korrespondierende starre Betätigungselement ausgewählt sind aus der Gruppe:
ein Kletterheber und eine korrespondierende Kletterleiter;
ein Schrittheber und ein korrespondierendes Rastelement.

4. Einsatzvorrichtung (200) nach einem der vorhergehenden Ansprüche, wobei die Spannkraft dafür eingerichtet ist, den Körperabschnitt um eine Strecke entlang der Ebene zu bewegen, wobei die Strecke gleich einer Strecke zwischen der ersten, nicht eingesetzten Position und der zweiten, eingesetzten Position ist; und/oder wobei das Spannelement dafür eingerichtet ist, sich relativ zu dem Körperabschnitt entlang der Ebene zwischen der ersten, nicht eingesetzten Position und der zweiten, eingesetzten Position zu bewegen, sodass die Spannkraft auf die mindestens eine Verankerungsleine entlang der Ebene aufgebracht wird.

5. Einsatzvorrichtung (200) nach einem der vorhergehenden Ansprüche, wobei der Plattformeingriffsabschnitt (202) an dem Turmkörper nahe dem ersten Ende des Turmkörpers angeordnet ist;
vorzugsweise wobei der Plattformeingriffsabschnitt (202) so geformt ist, dass er mit einem korrespondierenden Verbinder (112) an der Plattform in Eingriff gelangt;
vorzugsweise wobei der Plattformeingriffsabschnitt (202) ein Steckelement umfasst, das sich von dem ersten Ende des Turmkörpers erstreckt, wobei das Steckelement ein erstes Ende nahe dem Turmkörper und ein zweites Ende distal zum Turmkörper aufweist, wobei das zweite Ende des Steckelements dafür eingerichtet ist, in eine korrespondierende Aufnahme der Plattform einzugreifen, wobei der Eingriff eine seitliche Bewegung des Steckelements relativ zu der Aufnahme hemmt; und
vorzugsweise wobei das Steckelement ferner einen Flansch umfasst, der von nahe dem ersten Ende desselben radial absteht, wobei der Flansch dafür eingerichtet ist, ein weiteres Einführen des Steckelements in die Aufnahme zu begrenzen.

6. Einsatzvorrichtung (200) nach einem der vorhergehenden Ansprüche, wobei der Turmkörper ferner eine oder mehrere Anlegeeinrichtungen umfasst, die entlang der Länge desselben positioniert sind, wobei die Anlegeeinrichtungen dafür eingerichtet sind, einen Eingriff des Turms mit einem oder mehreren Seefahrzeugen zu ermöglichen.

7. Einsatzvorrichtung (200) nach einem der vorhergehenden Ansprüche, wobei der längliche Turm ferner ein Kopfelement umfasst, das dafür eingerichtet ist, mit dem zweiten Ende des Turmkörpers in Eingriff zu gelangen, wobei das Kopfelement eine Plattform umfasst, die das Verankerungsleinen-Spannelement darauf trägt; und
vorzugsweise wobei in der zweiten, eingesetzten Position die Plattform des Kopfelements dafür eingerichtet ist, oberhalb einer Oberfläche eines Gewässers zu verbleiben.

8. Einsatzvorrichtung (200) nach einem der vorhergehenden Ansprüche, wobei der Turmkörper einen Kanal umfasst, der sich entlang der Länge desselben zwischen dem ersten Ende und dem zweiten Ende erstreckt, und wobei sich zumindest ein Abschnitt von: der mindestens einen Verankerungsleine; der Spannleine; oder dem starren Betätigungselement; entlang des Kanals erstreckt.

9. Einsatzvorrichtung (200) nach einem der vorhergehenden Ansprüche, wobei der Turmkörper ferner mindestens ein Ballasttrageelement umfasst, das dafür eingerichtet ist, mindestens einen entfernbaren Ballast darauf zu tragen; und/oder wobei der Turmkörper ferner eine Ballastierungsfluidkammer umfasst, die dafür eingerichtet ist, ein Volumen an Ballastierungsfluid aufzunehmen; wobei der Turmkörper ferner einen Ballastierungsfluideinlass umfasst, der dafür eingerichtet ist, das Ballastierungsfluid in die Ballastierungsfluidkammer aufzunehmen; und einen Ballastierungsfluidauslass, der dafür eingerichtet ist, ein Austreten des Ballastierungsfluids aus der Ballastierungsfluidkammer zu ermöglichen; und
vorzugsweise wobei die Einsatzvorrichtung ferner eine Pumpe umfasst, die dafür eingerichtet ist, das Ballastierungsfluid in die und/oder aus der Ballastierungsfluidkammer und/oder in einen und/oder aus einem Hohlraum zu pumpen, der sich in der Offshore-Trägerplattform für ein System für erneuerbare Energien befindet.

10. Einsatzvorrichtung (200) nach einem der vorhergehenden Ansprüche, wobei der längliche Turm ferner umfasst: eine Schiene (215), die sich entlang eines Abschnitts des Turmkörpers erstreckt; und wobei das Verankerungsleinen-Spannelement an der Schiene befestigt ist, wobei das Verankerungsleinen-Spannelement dafür eingerichtet ist, sich entlang der Schiene zwischen der ersten, nicht eingesetzten Position und der zweiten, eingesetzten Position zu bewegen.

11. Einsatzvorrichtung (200) nach einem der vorhergehenden Ansprüche, wobei der Eingriff zwischen dem Plattformeingriffsabschnitt und der Plattform derart ist, dass, wenn der Plattformeingriffsabschnitt in Eingriff steht, sich der Turm im Wesentlichen senkrecht zu einer Basis der Plattform erstreckt.

12. Einsatzvorrichtung (200) nach einem der vorhergehenden Ansprüche, wobei im Gebrauch eine Bewegung des Körperabschnitts in Richtung der zweiten, eingesetzten Position dafür eingerichtet ist, die Plattform in dem Gewässer in eine getauchte Betriebskonfiguration mit einer Betriebstiefe einzutauchen.

13. Schwimmfähige Offshore-Plattform (100) zum Tragen eines Systems für erneuerbare Energien in einem Gewässer mit einer Oberfläche und einem Grund, wobei die schwimmfähige Offshore-Plattform umfasst: einen Basisabschnitt zum Eintauchen unter die Oberfläche des Gewässers;
einen oberen Abschnitt zum Verbleiben oberhalb der Oberfläche des Gewässers; einen Verbinder, der an dem Basisabschnitt oder dem oberen Abschnitt positioniert ist; und
eine Einsatzvorrichtung (200) nach einem der Ansprüche 1 bis 12.

14. Plattform (100) nach Anspruch 13,
wobei die schwimmfähige Offshore-Plattform ferner umfasst:
eine Schwimmkonfiguration, in der die schwimmfähige Offshore-Plattform im Wesentlichen schwimmend auf der Oberfläche des Gewässers positioniert ist; und
eine getauchte Betriebskonfiguration, in der der Basisabschnitt unter die Oberfläche des Gewässers getaucht ist und der obere Abschnitt oberhalb der Oberfläche des Gewässers verbleibt;
und wobei
im Gebrauch die auf die mindestens eine Verankerungsleine aufgebrachte Spannkraft derart ist, dass die schwimmfähige Offshore-Plattform zwischen der Schwimmkonfiguration, wenn sich der Körperabschnitt in der ersten, nicht eingesetzten Position befindet, und der getauchten Betriebskonfiguration, wenn sich der Körperabschnitt in der zweiten,
eingesetzten Position befindet, übergeht; und/oder
wobei der Basisabschnitt mindestens drei Eckpunkte umfasst, wobei mindestens die drei Eckpunkte einen korrespondierenden Verbinder umfassen; wobei die Plattform ferner eine Anzahl der Einsatzvorrichtungen umfasst, die gleich der Anzahl der Verbinder ist.

15. Verfahren zum Einsetzen einer schwimmfähigen Offshore-Plattform zum Tragen eines Systems für erneuerbare Energien, wobei das Verfahren umfasst:
Bewegen einer schwimmfähigen Offshore-Plattform entlang einer Oberfläche eines Gewässers zu einem Ort auf dem Gewässer;
Anbringen einer Einsatzvorrichtung nach einem der Ansprüche 1 bis 12 an der schwimmfähigen Offshore-Plattform;
Befestigen einer oder mehrerer Verankerungsleinen zwischen der Einsatzvorrichtung und einem Grund des Gewässers;
Aufbringen, unter Verwendung der Einsatzvorrichtung, einer Spannkraft auf die mindestens eine Verankerungsleine entlang einer Ebene, die im Wesentlichen senkrecht zu einer Ebene verläuft, die von einem Basisabschnitt der schwimmfähigen Offshore-Plattform eingenommen wird, sodass ein Abschnitt der schwimmfähigen Offshore-Plattform in das Gewässer eingetaucht wird; und
Lösen der Einsatzvorrichtung von der schwimmfähigen Offshore-Plattform.

## Revendications

1. Dispositif de déploiement (200) destiné à être utilisé pour déployer une plateforme de montage de système d'énergie renouvelable en mer (100) vers une configuration opérationnelle immergée, le dispositif de déploiement (200) comprenant :
une partie de corps comprenant une partie d'engagement de plateforme (202), la partie d'engagement de plateforme (202) étant agencée pour s'engager de manière fixe avec une partie correspondante (112) d'une plateforme de montage de système d'énergie renouvelable en mer (100) ; et
un élément de mise sous tension de ligne d'amarrage (218) couplé à la partie de corps ;
dans lequel la partie d'engagement de plateforme (202) est en outre agencée pour se désengager de la partie correspondante (112) de la plateforme (100) ;
dans lequel, en utilisation lorsque la partie d'engagement de plateforme (202) est engagée avec la partie correspondante (112) de la plateforme (100), l'élément de mise sous tension de ligne d'amarrage (218) est agencé pour appliquer une force de mise sous tension à au moins une ligne d'amarrage le long d'un plan sensiblement perpendiculaire à une base de ladite plateforme, dans lequel sous ladite force de mise sous tension, la partie de corps est agencée pour se déplacer par rapport à l'au moins une ligne d'amarrage depuis une première position non déployée vers une deuxième position déployée ; et
dans lequel la partie de corps comprend :
une tourelle allongée fixée à la partie d'engagement de plateforme (202), la tourelle comprenant : un corps de tourelle allongé (204) ayant une première extrémité, et une deuxième extrémité distale par rapport à la première extrémité.

2. Dispositif de déploiement (200) selon la revendication 1, dans lequel l'élément de mise sous tension de ligne d'amarrage (218) comprend une ligne de mise sous tension en communication avec celui-ci, la ligne de mise sous tension ayant une extrémité agencée pour s'engager de manière libérable avec une première extrémité de l'au moins une ligne d'amarrage, ladite ligne d'amarrage étant fixée à un fond d'un plan d'eau ;
de préférence dans lequel, lorsque la ligne de mise sous tension est engagée avec ladite ligne d'amarrage, l'élément de mise sous tension de ligne d'amarrage (218) est agencé pour appliquer la force de mise sous tension à la ligne de mise sous tension de telle sorte que la partie de corps se déplace de la première position non déployée vers la deuxième position déployée ; et
de préférence dans lequel l'élément de mise sous tension de ligne d'amarrage (218) et la ligne de mise sous tension correspondante sont choisis dans le groupe constitué par :
un vérin à chaîne et une chaîne correspondante ;
un vérin à torons et un ou plusieurs torons métalliques correspondants ;
un treuil et une ligne flexible correspondante.

3. Dispositif de déploiement (200) selon la revendication 1, dans lequel l'élément de mise sous tension de ligne d'amarrage (218) comprend un élément d'actionnement rigide ayant une extrémité agencée pour s'engager de manière libérable avec une première extrémité de l'au moins une ligne d'amarrage de ladite plateforme de montage de système d'énergie renouvelable en mer, ladite ligne d'amarrage étant fixée à un fond d'un plan d'eau ; de préférence dans lequel, lorsque l'élément d'actionnement rigide est engagé avec ladite ligne d'amarrage, l'élément de mise sous tension de ligne d'amarrage est agencé pour déplacer l'élément d'actionnement rigide afin d'appliquer la force de mise sous tension à la ligne d'amarrage engagée avec celui-ci, de telle sorte que la partie de corps se déplace de la première position non déployée vers la deuxième position déployée ; et de préférence dans lequel l'élément de mise sous tension de ligne d'amarrage et l'élément d'actionnement rigide correspondant sont choisis dans le groupe constitué par :
un vérin grimpant et une échelle grimpante correspondante ;
un vérin d'indexation et un élément indexé correspondant.

4. Dispositif de déploiement (200) selon l'une quelconque des revendications précédentes, dans lequel ladite force de mise sous tension est agencée pour déplacer la partie de corps sur une distance le long dudit plan, ladite distance étant égale à une distance entre la première position non déployée et la deuxième position déployée ; et/ou dans lequel l'élément de mise sous tension est agencé pour se déplacer par rapport à la partie de corps le long dudit plan, entre la première position non déployée et la deuxième position déployée, de telle sorte que la force de mise sous tension est appliquée à l'au moins une ligne d'amarrage le long dudit plan.

5. Dispositif de déploiement (200) selon l'une quelconque des revendications précédentes, dans lequel la partie d'engagement de plateforme (202) est située sur le corps de tourelle à proximité de la première extrémité du corps de tourelle ;
de préférence dans lequel la partie d'engagement de plateforme (202) est conformée pour s'engager avec un raccord correspondant (112) sur la plateforme ;
de préférence dans lequel la partie d'engagement de plateforme (202) comprend un élément mâle s'étendant depuis la première extrémité du corps de tourelle, l'élément mâle ayant une première extrémité à proximité du corps de tourelle et une deuxième extrémité distale par rapport au corps de tourelle, dans lequel la deuxième extrémité de l'élément mâle est agencée pour s'engager dans un logement femelle correspondant de la plateforme, ledit engagement empêchant un mouvement latéral de l'élément mâle par rapport au logement femelle ; et
de préférence dans lequel l'élément mâle comprend en outre une collerette rayonnant depuis la proximité de la première extrémité de celui-ci, la collerette étant agencée pour limiter une insertion supplémentaire de l'élément mâle dans ledit logement femelle.

6. Dispositif de déploiement (200) selon l'une quelconque des revendications précédentes, dans lequel le corps de tourelle comprend en outre un ou plusieurs éléments d'accostage positionnés le long de la longueur de celui-ci, lesdits éléments d'accostage étant agencés pour permettre l'engagement de la tourelle avec un ou plusieurs navires de mer.

7. Dispositif de déploiement (200) selon l'une quelconque des revendications précédentes, dans lequel la tourelle allongée comprend en outre un élément supérieur agencé pour s'engager avec la deuxième extrémité du corps de tourelle, l'élément supérieur comprenant une plateforme supportant l'élément de mise sous tension de ligne d'amarrage sur celle-ci ; et
de préférence dans lequel, à la deuxième position déployée, la plateforme de l'élément supérieur est agencée pour rester au-dessus d'une surface d'un plan d'eau.

8. Dispositif de déploiement (200) selon l'une quelconque des revendications précédentes, dans lequel le corps de tourelle comprend un canal s'étendant sur la longueur de celui-ci entre la première extrémité et la deuxième extrémité, et dans lequel au moins une partie parmi : l'au moins une ligne d'amarrage ; la ligne de mise sous tension ; ou l'élément d'actionnement rigide ; s'étend le long dudit canal.

9. Dispositif de déploiement (200) selon l'une quelconque des revendications précédentes, dans lequel le corps de tourelle comprend en outre au moins un élément de support de ballast agencé pour supporter au moins un ballast amovible sur celui-ci ; et/ou dans lequel le corps de tourelle comprend en outre un compartiment de fluide de ballastage agencé pour loger un volume de fluide de ballastage ; dans lequel le corps de tourelle comprend en outre une entrée de fluide de ballastage agencée pour recevoir le fluide de ballastage dans le compartiment de fluide de ballastage ; et une sortie de fluide de ballastage agencée pour permettre l'évacuation du fluide de ballastage hors du compartiment de fluide de ballastage ; et
de préférence dans lequel le dispositif de déploiement comprend en outre une pompe agencée pour pomper le fluide de ballastage dans et/ou hors du compartiment de fluide de ballastage, et/ou dans et/ou hors d'une cavité située dans ladite plateforme de montage de système d'énergie renouvelable en mer.

10. Dispositif de déploiement (200) selon l'une quelconque des revendications précédentes, dans lequel la tourelle allongée comprend en outre : un rail (215) s'étendant le long d'une partie du corps de tourelle ; et dans lequel l'élément de mise sous tension de ligne d'amarrage est fixé au rail, l'élément de mise sous tension de ligne d'amarrage étant agencé pour se déplacer le long du rail entre la première position non déployée et la deuxième position déployée.

11. Dispositif de déploiement (200) selon l'une quelconque des revendications précédentes, dans lequel l'engagement entre la partie d'engagement de plateforme et la plateforme est tel que, lorsque la partie d'engagement de plateforme est engagée, la tourelle s'étend sensiblement perpendiculairement à une base de ladite plateforme.

12. Dispositif de déploiement (200) selon l'une quelconque des revendications précédentes, dans lequel, lors de ladite utilisation, le déplacement de la partie de corps vers la deuxième position déployée est agencé pour immerger ladite plateforme dans ledit plan d'eau jusqu'à une configuration opérationnelle immergée ayant une profondeur de service.

13. Plateforme flottante en mer (100) pour supporter un système d'énergie renouvelable dans un plan d'eau ayant une surface et un fond, ladite plateforme flottante en mer comprenant : une partie de base destinée à être immergée sous ladite surface dudit plan d'eau ;
une partie supérieure destinée à rester au-dessus de ladite surface dudit plan d'eau ; un raccord positionné sur la partie de base ou la partie supérieure ; et
un dispositif de déploiement (200) selon l'une quelconque des revendications 1 à 12.

14. Plateforme (100) selon la revendication 13,
dans laquelle la plateforme flottante en mer comprend en outre :
une configuration flottante dans laquelle la plateforme flottante en mer est positionnée de manière à flotter sensiblement sur ladite surface dudit plan d'eau ; et
une configuration opérationnelle immergée dans laquelle la partie de base est immergée sous ladite surface dudit plan d'eau et la partie supérieure reste au-dessus de ladite surface dudit plan d'eau ;
et dans laquelle,
lors de ladite utilisation, la force de mise sous tension appliquée à l'au moins une ligne d'amarrage est telle que la plateforme flottante en mer effectue une transition entre la configuration flottante lorsque la partie de corps se trouve dans la première position non déployée, et la configuration opérationnelle immergée lorsque la partie de corps se trouve dans la deuxième position déployée ; et/ou
dans laquelle la partie de base comprend au moins trois sommets, dans laquelle au moins lesdits trois sommets comprennent un dit raccord correspondant ; dans laquelle la plateforme comprend en outre un nombre desdits dispositifs de déploiement égal au nombre de raccords.

15. Procédé de déploiement d'une plateforme flottante en mer pour supporter un système d'énergie renouvelable, le procédé comprenant :
le déplacement d'une plateforme flottante en mer le long d'une surface d'un plan d'eau jusqu'à un emplacement sur le plan d'eau ;
la fixation d'un dispositif de déploiement selon l'une quelconque des revendications 1 à 12 à la plateforme flottante en mer ;
la fixation d'une ou plusieurs lignes d'amarrage entre le dispositif de déploiement et un fond du plan d'eau ;
l'application, au moyen du dispositif de déploiement, d'une force de mise sous tension à l'au moins une ligne d'amarrage le long d'un plan sensiblement perpendiculaire à un plan occupé par une partie de base de la plateforme flottante en mer, de telle sorte qu'une partie de la plateforme flottante en mer devienne immergée dans le plan d'eau ; et
le détachement du dispositif de déploiement de la plateforme flottante en mer.
